(19) Europäisches Patentamt
European Patent Office
Office européen des brevets

(11) Veröffentlichungsnummer: **0 333 021 B1**

(12) **EUROPÄISCHE PATENTSCHRIFT**

(45) Veröffentlichungstag der Patentschrift: **28.06.95**

(51) Int. Cl.[6]: **C08L 83/04**, C08G 77/26

(21) Anmeldenummer: **89104154.3**

(22) Anmeldetag: **09.03.89**

(54) **Bei Raumtemperatur zu anstrichverträglichen bis überstreichbaren Elastomeren vernetzende Organopolysiloxanmassen.**

(30) Priorität: **11.03.88 DE 3808200**

(43) Veröffentlichungstag der Anmeldung:
**20.09.89 Patentblatt 89/38**

(45) Bekanntmachung des Hinweises auf die Patenterteilung:
**28.06.95 Patentblatt 95/26**

(84) Benannte Vertragsstaaten:
**AT BE CH DE ES FR GB IT LI NL SE**

(56) Entgegenhaltungen:
**EP-A- 0 000 929**
**EP-A- 0 050 453**
**FR-A- 2 500 842**
**US-A- 3 812 164**
**EP-A- 0 022 976**
**FR-A- 2 228 814**
**GB-A- 2 063 281**
**US-A- 4 760 123**

(73) Patentinhaber: **WACKER-CHEMIE GMBH**
**Hanns-Seidel-Platz 4**
**D-81737 München (DE)**

(72) Erfinder: **Schiller, August, Dr. Dipl.-Chem.**
**Göllstrasse 22**
**D-8265 Neuötting (DE)**
Erfinder: **Dorsch, Norman**
**Fuchshasen 148 1/3**
**D-8263 Burghausen (DE)**
Erfinder: **Graf, Werner, Dr. Dipl.-Chem.**
**Ludwig-Thoma-Strasse 21**
**D-8263 Burghausen (DE)**
Erfinder: **Braunsperger, Karl**
**Unterhadermark 86**
**D-8263 Burghausen (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 333 021 B1

Rank Xerox (UK) Business Services
(3.10/3.09/3.3.3)

## Beschreibung

Bei Raumtemperatur zu Elastomeren vernetzbare Organopolysiloxanmassen werden seit langem zum Abdichten von Fugen im Fassaden- und Fensterbau, im Sanitär- und technisch-industriellen Bereich verwendet. Die Verwendung solcher Massen erfährt aber dann eine Einschränkung, wenn die Organopolysiloxanelastomeren selbst oder die benachbarten Bauteile einer anstrichtechnischen Behandlung zugeführt werden müssen, da Organopolysiloxanelastomere sehr schlecht überstreichbar sind.

Es besteht daher seit langer Zeit die Aufgabe, die Anstrichverträglichkeit von Organopolysiloxanelastomeren zu verbessern bzw. Organopolysiloxanelastomere überstreichbar zu machen. Diese Aufgabe wurde bisher dadurch gelöst, daß bestimmte Silane vor dem Überziehen von vernetztem Organopolysiloxan mit Anstrichmittel auf das vernetzte Organopolysiloxan aufgetragen wurden oder mit dem Anstrichmittel kurz vor dessen Auftrag vermischt wurden (vgl. DE-PS 28 52 000) oder das Organopolysiloxan vor der Vernetzung mit bestimmten Zusätzen versehen wurde (vgl. z.B. EP-PS 96 424) oder Organosiloxaneinheiten enthaltende Farbstoffe als Anstrichmittel eingesetzt wurden (vgl. z.B. US-PS 4 038 293).

In der EP-A 0 050 453 wird eine bei Raumtemperatur vulkanisierbare elastomere Organopolysiloxanzusammensetzung beschrieben, die erhalten wird, indem ein lineares Polyorganosiloxan mit einem Füller, einem Silan oder Polysiloxan, bei dem in jedem Molekül mindestens ein Aminoalkylrest und in jedem Molekül mindestens ein Alkoxyrest oder Aminoalkoxyrest vorhanden ist, gemischt wird.

Gegenüber diesen bisher bekannten Lösungen der Aufgabe, die Anstrichverträglichkeit von Organopolysiloxanelastomeren zu verbessern bzw. die Organopolysiloxanelastomere überstreichbar zu machen, haben die erfindungsgemäßen Massen bzw. hat das erfindungsgemäße Verfahren z.B. die Vorteile, daß eine größere Anzahl von Arten vernetzter Organopolysiloxane anstrichverträglich bzw. überstreichbar gemacht werden können, d.h. nicht auf ein bestimmtes Vernetzungssystem eingeschränkt werden muß, die vernetzten Organopolysiloxane direkt mit dem Anstrichmittel überzogen werden können, d.h. daß keine weiteren zusätzlichen Additive oder Verfahrensschritte benötigt werden, was eine einfache Verarbeitung ermöglicht und die vernetzten Organopolysiloxane mit einer größeren Anzahl von Arten von Anstrichmittel überstrichen werden können, d.h. keine speziellen und relativ teuren Anstrichmittel verwendet werden müssen, sondern handelsübliche Anstrichmittel verwendet werden können.

Gegenstand der Erfindung sind bei Raumtemperatur zu Elastomeren vernetzende Einkomponenten- oder Zweikomponenten-Massen auf Grundlage von Diorganopolysiloxan (1) und mindestens einem weiteren Stoff, wobei die Vernetzung der Massen durch Kondensation erfolgt, dadurch gekennzeichnet, daß die Massen

(3) Organopolysiloxan mit basischem Stickstoff aufweisenden, SiC-gebundenen organischen Resten, das hergestellt wird, indem in einer

1. Stufe Silan der Formel

$YSiR_x(OR^1)_{3-x}$ ,

worin R gleiche oder verschiedene einwertige, gegebenenfalls substituierte Kohlenwasserstoffreste mit 1 bis 18 Kohlenstoffatomen je Rest, $R^1$ gleiche oder verschiedene Alkylreste mit 1 bis 4 Kohlenstoffatomen je Rest, Y einen einwertigen, SiC-gebundenen organischen Rest mit basischem Stickstoff bedeutet und x 0 oder 1 ist, oder Teilhydrolysat von derartigem Silan oder derartiges Silan und Teilhydrolysat von derartigem Silan mit Organopolysiloxan der Formel

$R_3SiO(SiR_2O)_nSiR_3$ ,

worin R die oben dafür angegebene Bedeutung hat und n 0 oder eine ganze Zahl im Wert von 1 bis 100 bedeutet, in Mengen von 0,1 bis 10 Gewichtsteilen je Gewichtsteil der Gesamtmenge von Silan der oben angegebenen Formel und Teilhydrolysat von derartigem Silan in Gegenwart von basischem Katalysator und in Abwesenheit von Wasser umgesetzt wird und in einer

2. Stufe das in der 1. Stufe erhaltene Organopolysiloxan mit Wasser umgesetzt wird, um Gruppen der Formel

$-OR^1$ ,

worin $R^1$ die oben dafür angegebene Bedeutung hat, zu hydrolysieren, gleichzeitig und/oder anschließend die bei dieser Hydrolyse gebildeten Silanolgruppen miteinander kondensiert werden und das dabei gebildete Produkt von Alkanol und Wasser befreit wird und

(4) verzweigtkettiges Organopolysiloxan, das aus
0 bis 50 Mol-% $R_3SiO_{1/2}$ - Einheiten,
0 bis 80 Mol-% $R_2SiO$ - Einheiten,
10 bis 60 Mol-% $RSiO_{3/2}$ - Einheiten und
0 bis 10 Mol-% $SiO_2$ - Einheiten,

wobei R die oben dafür angegebene Bedeutung hat und wobei dieses verzweigtkettige Organopolysiloxan 0 bis 10 Mol-% SiOC-gebundene Gruppen der Formel $-OR^2$, worin $R^2$ einwertige, gegebenenfalls durch eine Alkoxygruppe substituierte Kohlenwasserstoffreste mit 1 bis 8 Kohlenwasserstoffatomen je Rest bedeutet, und höchstens 0,5 Mol-% Si-gebundene Hydroxylgruppen enthält, besteht, enthalten oder daß die Massen den Bestandteil (4) enthalten.

Gegenstand der Erfindung ist weiterhin ein Verfahren zur Herstellung von bei Raumtemperatur zu anstrichverträglichen bis überstreichbaren Elastomeren vernetzende Einkomponenten- oder Zweikomponenten-Massen auf Grundlage von Diorganopolysiloxan (1) und mindestens einem weiteren Stoff, wobei die Vernetzung der Massen durch Kondensation erfolgt, dadurch gekennzeichnet, daß den Massen zur Erzielung von Anstrichverträglichkeit bis Überstreichbarkeit

(3) Organopolysiloxan mit basischem Stickstoff aufweisenden, SiC-gebundenen organischen Resten und

(4) verzweigtkettiges Organopolysiloxan, zugegeben werden oder daß den Massen der Bestandteil (4) zugegeben wird.

Organopolysiloxane mit basischem Stickstoff aufweisenden, SiC-gebundenen organischen Resten als Mischungsbestandteil von unter Ausschluß von Wasser lagerfähigen, bei Zutritt von Wasser bei Raumtemperatur zu Elastomeren vernetzende Organopolysiloxanmassen sind aus US 4 191 817 (ausgegeben 4. März 1980, E. Bosch et al., Wacker-Chemie GmbH) bekannt. Sie verbessern zwar die Haftfestigkeit der aus solchen Massen erzeugten Elastomeren auf Unterlagen, auf denen die Elastomeren erzeugt wurden, nicht aber die Haftfestigkeit von Anstrichen, die auf Elastomeren aus solchen Massen erzeugt wurden.

Die Verwendung von verzweigtkettigen Organopolysiloxanen als Weichmacher in unter Ausschluß von Wasser lagerfähigen, bei Zutritt von Wasser bei Raumtemperatur zu Elastomeren vernetzende Organopolysiloxanmassen sind aus DE-OS 33 05 356 (entsprechende US Ser.No. 349 537), offengelegt 25. August 1983, M.D. Beers, General Electric Co., bekannt. Es war nicht vorhersehbar, daß sie die Anstrichverträglichkeit solcher Massen verbessern.

Unter Anstrichverträglichkeit versteht man die Materialeigenschaft eines bewegungsausgleichenden Dichtstoffes, die eine handwerklich und optisch einwandfreie überlappende Begrenzung von max. 2 mm mit einem Anstrichmittel auf dem Dichtstoff im Randbereich einer Fuge zuläßt, ohne daß sich schädliche Wechselwirkungen zwischen dem Dichtstoff, dem Anstrichmittel und/oder auf angrenzenden Bauteilen ergeben.

Überstreichbarkeit demgegenüber bezeichnet die Eigenschaft, auf einem bewegungsausgleichenden Dichtstoff ganzflächig überdeckend einen oder mehrere Anstriche aufbringen zu können, ohne daß sich schädigende Wechselwirkungen funktioneller und optischer Art ergeben.

Ein Anstrich ist dann als funktionell und optisch einwandfrei zu bewerten, wenn dieser

- einwandfrei verläuft, d.h. keine Froschaugen, Benetzungsstörungen oder Krater zeigt,
- unter Ausbildung einer klebfreien Oberfläche aushärtet,
- am Untergrund einwandfrei haftet,
- sich nicht verfärbt und
- keine Runzelbildung im ausgehärteten Film zeigt.

Abgesehen von dem Gehalt an erfindungsgemäß verwendetem Organopolysiloxan (3) mit basischem Stickstoff aufweisenden, SiC-gebundenen organischen Resten und verzweigtkettigem Organopolysiloxan (4) können die erfindungsgemäß bei Raumtemperatur zu Elastomeren vernetzenden Massen auf Grundlage von Diorganopolysiloxan die gleichen Bestandteile in den gleichen Mengen enthalten, die auch in bei Raumtemperatur zu Elastomeren vernetzenden Massen auf Grundlage von Diorganopolysiloxan, die kein erfindungsgemäß verwendetes Organopolysiloxan (3) mit basischem Stickstoff aufweisenden, SiC-gebundenen organischen Resten und kein erfindungsgemäß verwendetes verzweigtkettiges Organopolysiloxan (4) enthalten, vorliegen können.

Solche Massen sind beispielsweise in der eingangs genannten US 4 191 817, in der EP-OS 253 377 (offengelegt 20. Januar 1988, E. Bosch et al., Wacker-Chemie GmbH), in der deutschen Patentanmeldung mit dem Aktenzeichen P 38 01 389.4 und in der US 4 490 500 (ausgegeben 25. Dezember 1984, R.A. Smith, General Electric Co.) beschrieben.

Die Vernetzung der erfindungsgemäßen, bei Raumtemperatur zu Elastomeren vernetzenden Massen auf Grundlage von Diorganopolysiloxanen erfolgt vorzugsweise durch Kondensation in bekannter Weise, wobei

die Massen in sogenannten Einkomponenten-Systemen oder sogenannten Zweikomponenten-Systemen vorliegen können.

Bei Raumtemperatur zu Elastomeren vernetzende Massen, die die erfindungsgemäßen Zusätze (3) und (4) oder nur den Bestandteil (4) enthalten, sind vorzugsweise solche aus

(1) kondensationsfähige Endgruppen aufweisendem Diorganopolysiloxan, sowie mit mindestens einer (2) Siliciumverbindung mit insgesamt mindestens drei über Stickstoff an Silicium gebundene Aminogruppen und/oder über Sauerstoff an Silicium gebundene Oximgruppen und/oder über Sauerstoff an Silicium gebundene, gegebenenfalls substituierte Kohlenwasserstoffoxygruppen je Molekül aufweisender Siliciumverbindung sowie

gegebenenfalls mindestens einem weiteren Stoff.

Beispiele für Organopolysiloxanmassen, die den erfindungsgemäßen Zusatz (3) und/oder (4) enthalten, sind vorzugsweise solche aus unter Ausschluß von Wasser lagerfähige, bei Zutritt von Wasser bei Raumtemperatur zu Elastomeren vernetzende oder härtende Massen auf Grundlage von Diorganopolysiloxan, sogenannte Einkomponenten-Systeme, weil bei Elastomeren aus solchen Massen, z.B. bei aus derartigen Elastomeren bestehenden Dichtungen von Holzfenstern oder von Fugen auf Schiffsdecks, oft erwünscht ist, sie selbst oder die angrenzenden Bauteile mit Anstrichmittel zu überziehen.

Besonders bevorzugt als bei Raumtemperatur zu Elastomeren vernetzende Massen, die die erfindungsgemäßen Zusätze (3) und (4) oder nur den Bestandteil (4) enthalten, sind einkomponentige, unter Ausschluß von Wasser lagerfähige, bei Zutritt von Wasser bei Raumtemperatur zu Elastomeren vernetzende Massen, die durch Vermischen von

(1) kondensationsfähige Endgruppe aufweisendem Diorganopolysiloxan mit mindestens einer (2) Siliciumverbindung mit insgesamt mindestens drei über Stickstoff an Silicium gebundene Aminogruppen und/oder über Sauerstoff an Silicium gebundene Oximgruppen und/oder über Sauerstoff an Silicium gebundene, gegebenenfalls substituierte Kohlenwasserstoffoxygruppen je Molekül aufweisender Siliciumverbindung sowie

gegebenenfalls mindestens einem weiteren Stoff hergestellt worden sind.

Die zur Herstellung solcher Massen meist verwendeten und auch im Rahmen der Erfindung bevorzugt eingesetzten kondensationsfähige Endgruppen aufweisenden Diorganopolysiloxane

(1) können z.B. durch die allgemeine Formel

(1) $HO(SiR^3_2\,O)_mH$ ,

wiedergegeben werden. In dieser Formel bedeutet $R^3$ gleiche oder verschiedene, einwertige, gegebenenfalls substituierte Kohlenwasserstoffreste und m eine ganze Zahl im Wert von mindestens 10. Innerhalb der bzw. entlang den Siloxanketten der vorstehend angegebenen Formel können, was bei derartigen Formeln üblicherweise nicht dargestellt wird, zusätzlich zu den Diorganosiloxaneinheiten ($SiR^3_2$ O) noch andere Siloxaneinheiten vorliegen. Beispiele für solche anderen, meist lediglich als Verunreinigungen vorliegenden Siloxaneinheiten sind solche der Formeln $R^3SiO_{3/2}$, $R^3_3$ $SiO_{1/2}$ und $SiO_{4/2}$, wobei $R^3$ jeweils die oben dafür angegebene Bedeutung hat. Die Menge an solchen anderen Siloxaneinheiten als Diorganosiloxaneinheiten beträgt jedoch vorzugsweise höchstens 10 Molprozent, insbesondere höchstens 1 Molprozent, jeweils bezogen auf das Gewicht der Diorganopolysiloxane (1).

Beispiele für Kohlenwasserstoffreste $R^3$ sind Alkylreste, wie der Methyl-, Ethyl-, n-Propyl- und Isopropylrest sowie Octadecylreste; Alkenylreste, wie der Vinyl- und Allylrest; cycloaliphatische Kohlenwasserstoffreste, wie der Cyclopentyl-und Cyclohexylrest sowie Methylcyclohexyl- und Cyclohexenylreste; Arylreste, wie der Phenylrest und Xenylreste; Aralkylreste, wie der Benzyl-, β-Phenylethyl- und der β-Phenylpropylrest; sowie Alkarylreste, wie Tolylreste.

Diese Kohlenwasserstoffreste $R^3$ können substituiert, insbesondere halogeniert sein, wie der 3,3,3-Trifluorpropyl-, Chlorphenyl- und Bromtolylrest. Weitere Beispiele für organische Reste $R^3$ sind Cyanalkylreste, wie der β-Cyanethylrest.

Diese in den endstandigen Einheiten je eine Si-gebundene Hydroxylgruppe aufweisenden Organopolysiloxane können im Gemisch mit in ihrer Gegenwart durch Polymerisation bzw. Mischpolymerisation mittels freier Radikale erzeugten Polymeren aus durch Additionspolymerisation polymerisierbaren Verbindungen, wie Styrol, Vinylacetat, Acrylsäure, Methacrylsäure, Acrylsäureestern, Methacrylsäureestern oder Acrylnitril oder einem Gemisch aus mindestens zwei derartiger polymerisierbarer Verbindungen, wie einem Gemisch aus Styrol und n-Butylacrylat, vorliegen. Diese Polymerisate müssen nicht alle im Gemisch mit den Diorganopolysiloxanen vorliegen. Sie können vielmehr zumindest in geringem Umfang auf das Diorganopolysiloxan aufgepfropft sein.

Mindestens der überwiegende Teil der Reste $R^3$ (soweit kein Polymerisat darauf aufgepfropft ist) besteht vor allem wegen der leichten Zugänglichkeit vorzugsweise aus Methylresten. Die gegebenenfalls vorhandenen übrigen Reste $R^3$ sind insbesondere Vinylreste oder Phenylreste oder Vinyl- und Phenylreste.

Die Viskosität der zu vernetzenden Organopolysiloxane beträgt vorzugsweise 100 bis 500 000 mPa.s bei 25 °C.

Beispiel für im Rahmen der Erfindung bei Einkomponentensystemen verwendbare Siliciumverbindungen (2) sind vorzugsweise Silane der allgemeinen Formel

(2a) $R^3_a SiZ_{4-a}$ ,

worin $R^3$ die oben dafür angegebene Bedeutung hat, a 0 oder 1 ist und Z gleiche oder verschiedene hydrolysierbare Gruppen, wie
Aminogruppen (-$NR^4_2$ ),
Oximgruppen (-$ON=CR^4_2$ ) und
gegebenenfalls substituierte Kohlenwasserstoffoxygruppen (-$OR^2$)
bedeutet, und deren 2 bis 10 Siliciumatome je Molekül aufweisende Teilhydrolysate. In diesen Formeln bedeutet $R^4$ Wasserstoff oder gleiche oder verschiedene einwertige, gegebenenfalls substituierte Kohlenwasserstoffreste mit 1 bis 18 Kohlenstoffatomen je Rest und $R^2$ hat die oben dafür angegebene Bedeutung.

Die oben angegebenen Beispiele für substituierte und unsubstituierte Kohlenwasserstoffreste $R^3$ gelten mit Ausnahme des Vinylrests im vollen Umfang auch für die substituierten und unsubstituierten Kohlenwasserstoffreste $R^4$.

Beispiele für Aminogruppen sind die n-Butylamino-, sec.-Butylamino- und Cyclohexylaminogruppe.

Beispiele für Oximgruppen sind die Acetaldoxim-, Acetonoxim- und 2-Butanonoximgruppe.

Weitere Beispiele für im Rahmen der Erfindung bei Einkomponenten-Systemen verwendbare Siliciumverbindungen (2) sind vorzugsweise Silane der allgemeinen Formel

(2b) $R^5Si(OR^2)_3$ ,

wobei $R^2$ die oben dafür angegebene Bedeutung hat und $R^5$ über $C_2$- bis $C_6$-Alkylenreste mit dem Siliciumatom verbundene Amino-, Mercapto-, Morpholino-, Glycidoxy-, Acryloxy- und Methacryloxygruppen, wobei die genannten Amino- und Mercaptogruppen durch $C_1$- bis $C_6$-Alkyl-, Cycloalkyl-, Aminoalkyl- und Mercaptoalkylgruppen substituiert sein können, bedeutet.

Beispiele für Alkylreste $R^2$ sind der Methyl-, Ethyl-, n-Propyl-, Isopropyl-, n-Butyl-, sec.-Butyl- und der tert.-Butylrest, wobei der Methyl- und der Ethylrest bevorzugt sind. Beispiele für durch eine Alkoxygruppe substituierte Kohlenwasserstoffreste $R^2$ sind der Methoxyethylenoxy-, der Ethoxyethylenoxy- und der Methoxyisopropylenoxyrest.

Beispiele für bevorzugte Reste $R^5$ sind der $\beta$-Aminoethyl-gamma-aminopropylrest, der 3-Mercaptopropylrest, der 3-Aminopropylrest, der 3-(N-Cyclohexyl-)aminopropylrest, der 3-Methacryloxypropylrest, der 3-Acryloxypropylrest, der 3-Morpholinopropylrest, der 3-(N-Methyl-)aminopropylrest und der Glycidoxypropylrest.

Beispiele für Silane der Formel (2b) sind Methacryloxypropyltrimethoxysilan, Glycidoxypropyltriethoxysilan, Mercaptopropyltrimethoxysilan, $\beta$-Aminoethyl-gamma-aminopropyltrimethoxysilan, und $\beta$-Aminoethyl-gamma-aminopropyltriethoxysilan.

Weitere Beispiele für im Rahmen der Erfindung bei Einkomponenten-Systemen verwendbare Siliciumverbindungen (2) sind vorzugsweise Silane der Formel

(2c) 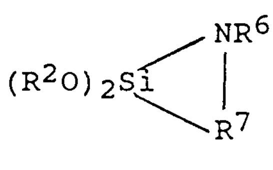 ,

wobei $R^2$ die oben dafür angegebene Bedeutung hat, $R^6$ ein Wasserstoffatom oder eine Alkyl-, Cycloalkyl-, Aminoalkyl- oder Mercaptoalkylgruppe mit jeweils 1 bis 6 Kohlenstoffatomen bedeutet und $R^7$ einen zweiwertigen aliphatischen Kohlenwasserstoffrest mit 1 bis 10 Kohlenstoffatomen je Rest bedeutet. Besonders bevorzugt als Rest $R^7$ ist der Rest der Formel

$-(CH_2)_3-$ .

Beispiele für Silane der Formel (2c) sind solche der Formeln

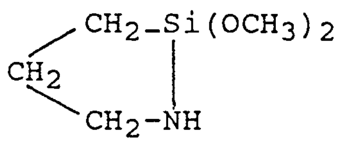

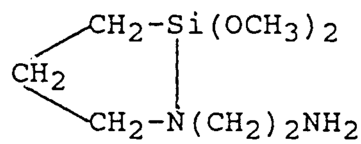

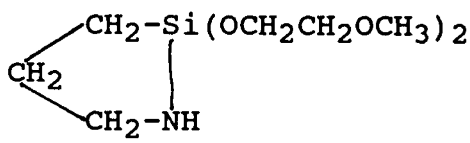

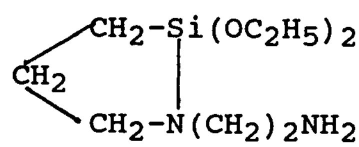

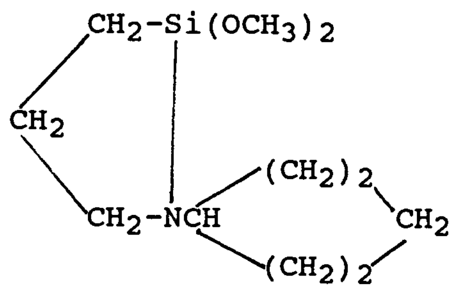

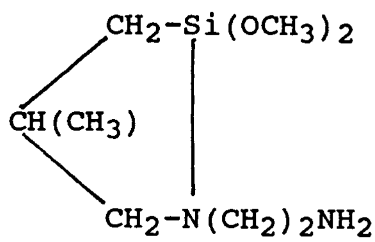

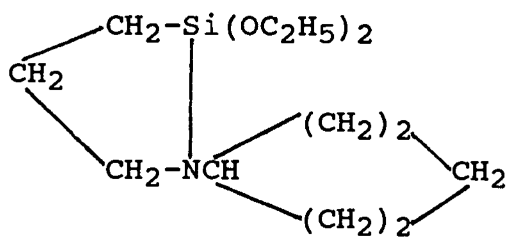

Weitere Beispiele für Organopolysiloxanmassen, die die erfindungsgemäßen Zusätze (3) und (4) oder nur den Bestandteil (4) enthalten, sind vorzugsweise bei Raumtemperatur zu Elastomeren vernetzende Zweikomponentenmassen, wobei vorzugsweise die Komponente (A) kondensationsfähige Endgruppen aufweisende Diorganopolysiloxane (1) als vernetzende Diorganopolysiloxane enthält und die Komponente (B) insgesamt mindestens drei über Sauerstoff an Silicium gebundene, gegebenenfalls substituierte Kohlenwasserstoffoxygruppen je Molekül aufweisender Siliciumverbindungen (2d) als Vernetzer enthält und wobei beide Komponenten gegebenenfalls mindestens einen weiteren Stoff enthalten.

Bevorzugt als vernetzende Diorganopolysiloxane (1) sind die oben genannten Diorganopolysiloxane der Formel (1).

Bevorzugt als Siliciumverbindung (2d) als Vernetzer sind solche der Formel

$$R_a^3\ Si(OR^2)_{4-a},$$

wobei a, $R^2$ und $R^3$ die oben genannte Bedeutung haben, oder deren Oligomere.

Die Herstellung der erfindungsgemäß eingesetzten Organopolysiloxane (3) mit basischen Stickstoff aufweisenden, SiC-gebundenen organischen Resten ist in der deutschen Anmeldung mit dem Aktenzeichen P 36 37 837.2-44 eingehend beschrieben. Diese Organopolysiloxane, die vorzugsweise aus Einheiten der Formel $R_3SiO_{1/2}$,

$$R_2SiO \text{ und } YSiR_x O_{\frac{3-x}{2}},$$

wobei x 0 oder 1 ist und R und Y die oben dafür angegebene Bedeutung haben, bestehen, enthalten aufgrund ihres Herstellungsverfahrens besonders wenig kondensationsfähige Gruppen wie Silanolgruppen. Dadurch sind die erfindungsgemäß eingesetzten Organopolysiloxane (3) mit basischen Stickstoff aufweisenden, SiC-gebundenen organischen Resten bzw. die diese Organopolysiloxane enthaltenden bei Raumtemperatur zu Elastomeren vernetzbaren Organopolysiloxanmassen, besonders gut lagerfähig.

Als Organopolysiloxane (3) mit basischen Stickstoff aufweisenden, SiC-gebundenen organischen Resten werden solche mit einer Aminzahl (= Anzahl der ml 1n HCl, die zum Neutralisieren von 1 g Substanz erforderlich sind) von vorzugsweise 1 bis 10, besonders bevorzugt 2 bis 7, und solche mit einer Viskosität bei 25°C von vorzugsweise 10 bis 5000 $mm^2/s$, besonders bevorzugt 50 bis 2500 $mm^2/s$, eingesetzt. Die Äquivalentgewichte dieser Organopolysiloxane liegen demnach vorzugsweise zwischen 100 und 1000, besonders bevorzugt zwischen 140 und 500. Das Verhältnis der Siloxaneinheiten mit einem basischen Stickstoff aufweisenden, SiC-gebundenen organischen Rest, also Einheiten der Formel

$$YSiR_x O_{\frac{3-x}{2}},$$

zu den Diorganosiloxaneinheiten, also Einheiten der Formel $R_2SiO$, wobei R, Y und x die oben dafür angegebene Bedeutung haben, in diesen Organopolysiloxanen (3) beträgt vorzugsweise 1:1 bis 1:25, besonders bevorzugt 1:1 bis 1:10.

Die gegebenenfalls fluorierten Kohlenwasserstoffreste R enthalten 1 bis 18 Kohlenstoffatome je Rest. Beispiele für Kohlenwasserstoffreste R sind der Methyl-, Ethyl-, n-Propyl-und Isopropylrest sowie Butyl-, Octyl-, Tetradecyl- und Octadecylreste, aus Kohlen- und Wasserstoffatomen aufgebaute Reste mit aliphatischer Mehrfachbindung, wie der Vinyl- und Allylrest sowie Hexenylreste; cycloaliphatische Kohlenwasserstoffreste, wie der Cyclopentyl- und Cyclohexylrest sowie Methylcyclohexylreste; aromatische Kohlenwasserstoffreste, wie der Phenylrest und Xenylreste; Alkarylreste, wie Tolylreste; und Aralkylreste, wie der Benzylrest. Ein Beispiel für einen fluorierten Kohlenwasserstoffrest ist der 3,3,3-Trifluorpropylrest.

Beispiele für Alkylreste $R^1$ sind der Methyl-, Ethyl-, n-Propyl-, Isopropyl-, n-Butyl-, sec.-Butyl- und der tert.-Butylrest, wobei der Methyl- und der Ethylrest bevorzugt sind.

Vorzugsweise sind die einwertigen, SiC-gebundenen organischen Reste mit basischem Stickstoff, also die Reste Y, solche der Formel

$R^8_2NR^9$-,

worin $R^8$ Wasserstoff oder gleiche oder verschiedene Alkyl-oder Cycloalkyl- oder Aminoalkylreste und $R^9$ einen zweiwertigen von aliphatischen Mehrfachbindungen freien Kohlenwasserstoffrest mit einem Kohlenstoffatom oder 2 oder 4 Kohlenstoffatomen je Rest, insbesondere den Rest der Formel

$-(CH_2)_3-$

bedeutet.

Die Beispiele für Alkylreste R gelten in vollem Umfang auch für Alkylreste $R^8$.

Beispiele für Aminoalkylreste $R^8$ sind solche der Formel

$H_2N(CH_2)_3-$
$H_2N(CH_2)_2NH(CH_2)_3-$
$H_2N(CH_2)_2-$
$(H_3C)_2N(CH_2)_2-$
$H_2N(CH_2)_4-$

$H(NHCH_2CH_2)_3$- und
$C_4H_9NHCH_2CH_2NH(CH_2)_2$- .

Ein Beispiel für einen Cycloalkylrest $R^8$ ist der Cyclohexylrest.

Die einwertigen, SiC-gebundenen Reste mit basischem Stickstoff, also die Reste Y, können aber auch z.B. solche der Formel

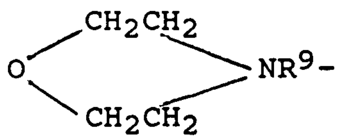 oder 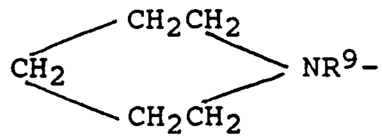

sein, wobei $R^9$ jeweils die oben dafür angegebene Bedeutung hat.

Besonders bevorzugt werden Silane der Formel

$YSi(CH_3)_x(OR^1)_{3-x}$ ,

wobei Y, $R^1$ und x die oben dafür angegebene Bedeutung haben, eingesetzt.

Einzelne Beispiele für Silane der Formel

$YSiR_x(OR^1)_{3-x}$ ,

die in der ersten Stufe des Verfahrens zur Herstellung der Organopolysiloxane (3) eingesetzt werden können, sind solche der Formel

$H_2N(CH_2)_3Si(CH_3)(OC_2H_5)_2$
$H_2N(CH_2)_2NH(CH_2)_3Si(CH_3)(OCH_3)_2$

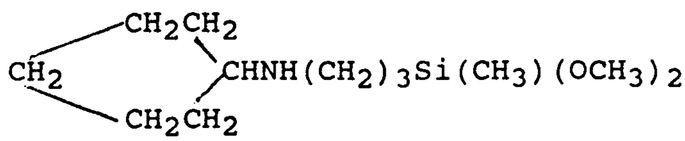

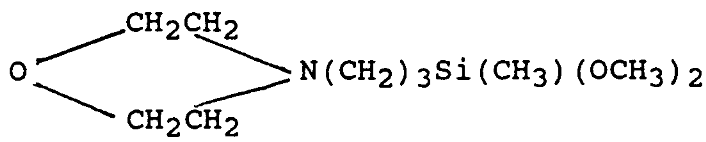

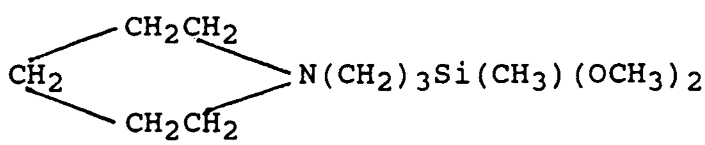

$H_2N(CH_2)_3Si(OCH_3)_3$
$H_2N(CH_2)_3Si(OC_2H_5)_3$
$H_2N(CH_2)_2NH(CH_2)_3Si(OCH_3)_3$

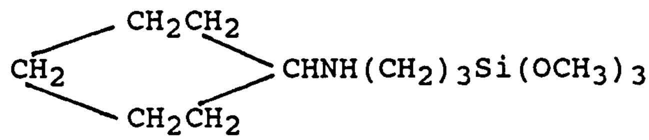

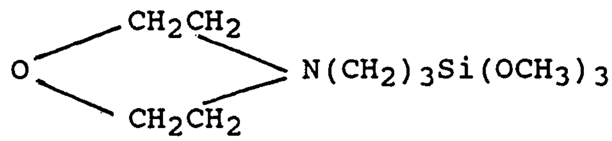

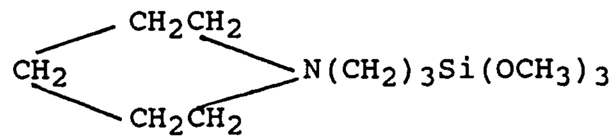

Ein einzelnes Beispiel für ein Teilhydrolysat eines derartigen Silans ist das Disiloxan der Formel

$[H_2N(CH_2)_2NH(CH_2)_3Si(CH_3)(OC_2H_5)]_2O$.

Als basische Katalysatoren können in der 1. Stufe der Herstellung der erfindungsgemäß eingesetzten Organopolysiloxane (3) mit basischen Stickstoff aufweisenden, SiC-gebundenen organischen Resten beliebige basische Katalysatoren eingesetzt werden, mit denen die Äquilibrierung von Gemischen aus Organosiliciumverbindungen mit basischen Stickstoff aufweisenden, SiC-gebundenen organischen Resten und Organo(poly)siloxanen ohne derartige Reste gefordert werden kann. Beispiele für derartige Katalysatoren sind Alkalimetallhydride, Alkalimetallhydroxide, Alkalimetallsilanolate bzw. Alkalimetallsiloxanolate, quaternäre Ammoniumhydroxide, quaternäre Ammoniumsilanolate bzw. quaternäre Ammoniumsiloxanolate, quaternäre Phosphoniumhydroxide, quaternäre Phosphoniumsilanolate bzw. quaternäre Phosphoniumsiloxanolate, Alkylalkalimetalle, Alkenylalkalimetalle, Arylalkalimetalle, mit Basen aktivierte Montmorillonite und basische Ionenaustauscherharze. Einzelne Beispiele für derartige basische Katalysatoren sind Natriumhydroxid, Kaliumhydroxid, Cäsiumhydroxid, Kaliummethylsilanolat, Tetra-n-butylphosphoniumhydroxid, Umsetzungsprodukte aus Tetramethylammoniumhydroxid und Octamethylcyclotetrasiloxan, Tetramethylammoniumhydroxid, Benzyltrimethylammoniumhydroxid, Naphthalinkalium, n-Butyllithium und Amylnatrium.

Als verzweigtkettiges Organopolysiloxan (4) wird vorzugsweise solches eingesetzt, das bei Raumtemperatur flüssig ist und eine Viskosität bei 23 °C von vorzugsweise 8 bis 200, besonders bevorzugt von 12 bis 40 $mm^2/s$ aufweist.

Die Herstellung des verzweigtkettigen Organopolysiloxans erfolgt in bekannter Weise durch Hydrolyse der entsprechenden Chlorsilane oder Alkoxysilane oder durch Coäquilibrierung geeigneter Siloxane. Nach der Hydrolyse muß der Si-gebundene Hydroxylgehalt des Polymers durch Kondensation, ggf. unter Zusatz von Katalysatoren, auf einen Gehalt von max. 0,5 % vermindert werden. Durch geeignete Verfahrensfuhrung, am besten durch Zugabe von Lösungsmitteln, muß bei dieser Kondensation ebenso wie bei der Herstellung durch Äquilibrierung geeigneter Organopolysiloxane verhindert werden, daß die Viskosität des fertigen verzweigtkettigen Organopolysiloxans über 200 $mm^2/s$ bei 23 °C ansteigt.

Es kann eine Art von Organopolysiloxan (3) oder auch ein Gemisch aus mindestens zwei verschiedenen Arten von Organopolysiloxan (3) in den erfindungsgemäßen Massen eingesetzt werden.

Ebenso kann eine Art von verzweigtkettigem Organopolysiloxan (4) oder auch ein Gemisch aus mindestens zwei verschiedenen Arten von Organopolysiloxan (4) in den erfindungsgemäßen Massen eingesetzt werden.

Vorzugsweise sind die Organopolysiloxane (3) in Mengen von 0,1 bis 20 Gew.-%, insbesondere 0,5 bis 5 Gew.-%, jeweils bezogen auf das Gesamtgewicht der jeweiligen Masse, in den erfindungsgemäßen Massen enthalten.

Vorzugsweise sind die verzweigtkettigen Organopolysiloxane (4) in Mengen von 1 bis 30 Gew.-%, insbesondere 5 bis 20 Gew.-%, jeweils bezogen auf das Gesamtgewicht der jeweiligen Masse, in den erfindungsgemäßen Massen enthalten.

Besonders gute Ergebnisse werden erzielt, wenn die erfindungsgemäßen Massen beide Zusätze (3) und (4) enthalten. Besonders bevorzugt enthalten daher die erfindungsgemäßen Massen das Organopolysiloxan (3) und das verzweigtkettige Organopolysiloxan (4) bzw. werden bei dem erfindungsgemäßen Verfahren den Massen das Organopolysiloxan (3) und das verzweigtkettige Organopolysiloxan (4) zugegeben.

Anstrichverträgliche bis überstreichbare Elastomere können auch erhalten werden, wenn nur das verzweigtkettige Organopolysiloxan (4) in den erfindungsgemäßen Massen enthalten ist bzw. bei dem erfindungsgemäßen Verfahren den Massen zugegeben wird.

Ein Beispiel für weitere Stoffe, außer den Stoffen (1), (2), (2a) bis (2d), (3) und (4), die vorzugsweise bei der Bereitung der erfindungsgemäßen Massen mitverwendet werden können, sind Weichmacher, wie Triorganosiloxygruppen als endständige Einheiten aufweisende lineare Organopolysiloxane oder Weichmacher auf Kohlenwasserstoffbasis, wie sie z.B. in
DE-AS 23 64 856, DE-AS 28 02 170, DE-AS 29 08 036,
DE-OS 33 23 911, DE-OS 33 29 877, DE-PS 33 42 026 und
DE-PS 33 42 027 beschrieben sind.

Lineare Organopolysiloxane mit Triorganosiloxygruppen als endständige Einheiten werden vorzugsweise in Mengen von höchstens 10 Gew.-%, jeweils bezogen auf das Gesamtgewicht der jeweiligen Masse, mitverwendet. Lineare Organopolysiloxane mit Triorganosiloxygruppen als endständigen Einheiten wirken im Gegensatz zu den verzweigtkettigen Organopolysiloxanen (4) stark abweisend gegenüber Anstrichmittel auf wäßriger oder organischer Lösungsmittelbasis, sodaß Anstrichmittel auf Elastomeren, die diese linearen Organopolysiloxane als Weichmacher enthalten, schlecht verlaufen und schlecht haften. Die Weichmacher auf Kohlenwasserstoffbasis weisen eine größere Flüchtigkeit im Vergleich zu den verzweigtkettigen Organopolysiloxanen (4) auf, d.h. sie dampfen aus den Elastomeren ab, und sind zudem oft wenig UV-stabil, was zu einer Vergilbung der Vulkanisate führen kann.

Massen, die das Organopolysiloxan (3) enthalten, nicht aber das verzweigtkettige Organopolysiloxan (4) ergeben Elastomere, die Anstrichverträglichkeit aufweisen. Da Weichmacher, wie die oben genannten linearen Organopolysiloxane mit endständigen Triorganosiloxyeinheiten, nur in geringen Mengen mitverwendet werden können bzw. Weichmacher auf Kohlenwasserstoffbasis weniger vorteilhaft sind, ergeben sich Elastomere mit hartelastischem Eigenschaftsbild, d.h. die Vulkanisate weisen einen hohen Spannungsrest bei Dehnung auf, was bei vielen Anwendungen der erfindungsgemäßen Massen als Dichtstoffe unerwünscht ist.

Massen, die das verzweigtkettige Organopolysiloxan (4), nicht aber das Organopolysiloxan (3) enthalten, ergeben Elastomere, die Verträglichkeit gegenüber Anstrichmittel aufweisen, d.h. die Anstrichmittel verlaufen recht gut auf solchen Elastomeren, die Haftung der Anstrichmittel auf den Elastomeren ist jedoch meist ungeeignet.

Zusätzlich zu den vorgenannten Stoffen können die erfindungsgemäßen Organopolysiloxanmassen weitere, an sich bekannte Stoffe enthalten.

Weitere Stoffe, die vorzugsweise bei der Bereitung der erfindungsgemäßen Massen mitverwendet werden können, sind Kondensationskatalysatoren, verstärkende Füllstoffe, nicht-verstärkende Füllstoffe, Pigmente, lösliche Farbstoffe, Riechstoffe, Fungicide, rein-organische Harze, wie Homo- oder Mischpolymerisate des Acrylnitrils, Styrols, Vinylchlorids oder Propylens, wobei solche rein-organischen Harze, insbesondere Mischpolymerisate aus Styrol und n-Butylacrylat, bereits in Gegenwart von in den endstandigen Einheiten je eine Si-gebundene Hydroxylgruppe aufweisendem Diorganopolysiloxan durch Polymerisation der genannten Monomeren mittels freier Radikale erzeugt worden sein können, Korrosionsinhibitoren, Polyglykole, die verestert und/oder verethert sein können, Oxidationsinhibitoren, Hitzestabilisatoren, Lösungsmittel, Mittel zur Beeinflussung der elektrischen Eigenschaften, wie leitfähiger Ruß, flammabweisend machende Mittel, Lichtschutzmittel und Mittel zur Verlängerung der Hautbildungszeit, wie Silane mit SiC-gebundenen Mercaptoalkylresten, sowie zellenerzeugende Mittel, z.B. Azodicarbonamid.

Desgleichen können bei der Bereitung der erfindungsgemäßen unter Abspaltung von Alkoholen vernetzenden, einkomponentigen Organopolysiloxanmassen vorzugsweise Silane der Formel

$$R^3_b\,Si(OR^2)_{4-b}\ ,$$

worin $R^2$ und $R^3$ jeweils die oben dafür angegebene Bedeutung haben und b 0 oder 1 ist, oder deren Teilhydrolysate, wie Hexamethoxydisiloxan, sowie zur Verbesserung der Lagerstabilität solcher Massen vorzugsweise Salze von Metallen der 2. Haupt- und Nebengruppe des Periodensystems mit verzweigtkettigen Carbonsäuren mit 5 bis 15 Kohlenstoffatomen, wie sie in der deutschen Patentanmeldung mit dem Aktenzeichen P 38 01 389.4 beschrieben sind, mitverwendet werden.

Desgleichen können Mittel zur Verbesserung der Haftung der aus den erfindungsgemäßen Massen hergestellten Elastomeren auf den Unterlagen, auf denen die Elastomere erzeugt wurden, vorzugsweise aminofunktionelle Silane, wie z.B. gamma-Aminopropyltriethoxysilan und N-(2-Aminoethyl)-3-aminopropyltriethoxysilan, und die in der eingangs genannten US 4 191 817 erwähnten Organopolysiloxane mit SiC-gebundenen, basischen Stickstoff aufweisenden Resten, mitverwendet werden.

Kondensationskatalysatoren werden vorzugsweise eingesetzt. Beispiele für Kondensationskatalysatoren sind Butyltitanate und organische Zinnverbindungen, wie Di-n-butylzinndiacetat, Di-n-butylzinndilaurat und Umsetzungsprodukte von je Molekül mindestens zwei uber Sauerstoff an Silicium gebundene, gegebenenfalls durch eine Alkoxygruppe substituierte, einwertige Kohlenwasserstoffreste als hydrolysierbare Gruppen aufweisendem Silan oder dessen Oligomer mit Diorganozinndiacylat, wobei in diesen Umsetzungsprodukten alle Valenzen der Zinnatome durch Sauerstoffatome der Gruppierung

= SiOSn =

bzw. durch SnC-gebundene, einwertige organische Reste abgesättigt sind. Die Herstellung derartiger Umsetzungsprodukte ist in US 4 460 761 (ausgegeben 17. Juli 1984, A. Schiller et al., Wacker-Chemie GMbH) eingehend beschrieben.

Vorzugsweise enthalten die erfindungsgemäßen Massen Füllstoffe. Beispiele für Füllstoffe sind nichtverstärkende Füllstoffe, also Füllstoffe mit einer BET-Oberfläche von bis zu 50 $m^2/g$, wie Quarz, Diatomeenerde, Calciumsilikat, Zirkoniumsilikat, Zeolithe, Metalloxidpulver, wie Aluminium-, Titan-, Eisen- oder Zinkoxide bzw. deren Mischoxide, Bariumsulfat, Calciumcarbonat, Gips, Siliciumnitrid, Siliciumcarbid, Bornitrid, Glas- und Kunststoffpulver, wie Polyacrylnitrilpulver; verstarkende Füllstoffe, also Füllstoffe mit einer BET-Oberfläche von mehr als 50 $m^2/g$, wie pyrogen hergestellte Kieselsäure, gefällte Kieselsäure, Ruß, wie Furnace- und Acetylenruß und Silicium-Aluminium-Mischoxide großer BET-Oberfläche; faserförmige Füllstoffe, wie Asbest sowie Kunststoffasern. Die genannten Füllstoffe können hydrophobiert sein, beispielsweise durch die Behandlung mit Organosilanen bzw. -siloxanen oder mit Stearinsäure oder durch Veretherung von Hydroxylgruppen zu Alkoxygruppen. Es kann eine Art von Füllstoff, es kann aber auch ein Gemisch von mindestens zwei Füllstoffen eingesetzt werden.

Zur Bereitung der erfindungsgemäßen einkomponentigen Massen können alle Bestandteile der jeweiligen einkomponentigen Masse in beliebiger Reihenfolge miteinander vermischt werden. Dieses Vermischen erfolgt vorzugsweise bei Raumtemperatur. Falls erwünscht, kann dieses Vermischen aber auch bei höheren Temperaturen erfolgen, z.B. bei Temperaturen im Bereich von 35 °C bis 135 °C. Vorzugsweise wird bei diesem Vermischen der Zutritt von Wasser soweit wie möglich ausgeschlossen.

Für die Vernetzung der erfindungsgemäßen einkomponentigen Massen reicht der übliche Wassergehalt der Luft aus. Die Vernetzung kann, falls erwünscht, auch bei höheren oder niedrigeren Temperaturen als Raumtemperatur, z.B. bei -5 °C bis 10 °C oder bei 30 °C bis 50 °C durchgeführt werden.

Zur Bereitung der erfindungsgemäßen, zweikomponentigen Massen werden vorzugsweise zur Bereitung der Komponente (A) die zu vernetzenden Diorganopolysiloxane (1) mit den erfindungsgemäßen Bestandteilen (3) und (4) oder nur den Bestandteil (4) sowie gegebenenfalls mit weiteren der oben genannten Stoffen, wie Füllstoffen, vermischt und bei der Bereitung der Komponente (B) der Vernetzer, die Siliciumverbindung (2 d), mit mindestens einem weiteren der oben genannten Stoffe, wie Kondensations-Katalysatoren, Haftvermittler und Füllstoffen miteinander vermischt. Die Vernetzung der zweikomponentigen Masse erfolgt durch Vermischen der Komponente (A) mit der Komponente (B).

Bei den im Rahmen der Erfindung verwendeten Anstrichmitteln kann es sich um Lacke, wäßrige Dispersionen oder Lasuren handeln, z.B. um solche auf Grundlage von Alkydharz, Polyurethan bzw. Ausgangsprodukten für Polyurethan, Nitrocellulose, Epoxyd, Polyester oder Polyvinylchlorid oder Mischpolymerisat von Polyvinylchlorid, die üblicherweise in organischem Lösungsmittel gelöst sind, oder um solche auf Grundlage von Acrylharz, Polyvinylacetat oder Mischpolymerisat von Polyvinylacetat und/oder Styrol, wie Polystyrolacetat, die üblicherweise als wäßrige Dispersionen eingesetzt werden.

Die erfindungsgemäßen Massen können für alle Verwendungszwecke eingesetzt werden, für die bei Raumtemperatur zu Elastomeren vernetzende Massen eingesetzt werden können, und für die es erforderlich ist, die vernetzten Massen selbst oder die an die vernetzten Massen angrenzenden Materialien mit Anstrichmittel zu überziehen.

Die erfindungsgemäßen Massen eignen sich somit ausgezeichnet beispielsweise als Abdichtungsmassen für Fugen, einschließlich senkrecht verlaufender Fugen, und ähnlichen Leerräumen von z.B. 10 bis 40 mm lichter Weite, z.B. von Gebäuden, Land-, Wasser- und Luftfahrzeugen, oder als Klebstoffe oder Verkittungsmassen, z.B. im Fensterbau oder bei der Herstellung von Aquarien oder Vitrinen, sowie z.B. zur Herstellung von Schutzüberzügen, einschließlich solcher für der ständigen Einwirkung von Süß- oder

Meerwasser ausgesetzte Oberflächen, oder das Gleiten verhindernden Überzügen, oder von gummielastischen Formkörpern sowie für die Isolierung von elektrischen oder elektronischen Vorrichtungen.

In den folgenden Beispielen beziehen sich alle Angaben von Teilen und Prozentsätzen auf das Gewicht, soweit nichts anderes angegeben ist.

In den folgenden Beispielen bedeutet die Angabe, daß eine Paste standfest ist, daß sie bei Prüfung nach DIN (Deutsche Industrie Norm) 52454 aus einer senkrechten Schiene mit Profil U 26 (lichte Weite 26 mm, Tiefe 18 mm) nicht mehr als 2 mm austritt.

In den folgenden Beispielen werden Shore-A-Härte nach DIN (Deutsche Industrie Norm) 53505, Reißfestigkeit, Reißdehnung und Spannungswert bei 100 % Dehnung nach DIN 53504 mit Normstab S 3A bestimmt.

Beispiel 1

Herstellung des Bestandteils (3)

a) Ein Gemisch aus 222 Teilen N-(2-Aminoethyl)-3-aminopropyltrimethoxysilan, also eines Silans der Formel

$H_2N(CH_2)_2NH(CH_2)_3Si(OCH_3)_3$ ,

444 Teilen durch Trimethylsiloxygruppen endblockiertem Dimethylpolysiloxan mit durchschnittlich 10 Siloxaneinheiten je Molekül und 1 Teil einer 40 %-igen Lösung von Tetramethylammoniumhydroxid in Methanol wird unter trockenem Stickstoff 1 Stunde bei 80 °C gerührt.

Man setzt daraufhin 175 Teile dest. Wasser hinzu und rührt weitere 2 Stunden bei 80 °C. Dabei destilliert ein Teil des Methanols ab. Dann wird Vakuum angelegt und Methanol und Wasser bei 13 hPa (abs.) abdestilliert. Im Anschluß daran wird das quaternäre Ammoniumhydroxid durch einstündiges Erwärmen auf 150 °C bei 13 hPa (abs.) unwirksam gemacht und gleichzeitig das Organopolysiloxan von unter diesen Bedingungen siedenden Bestandteilen befreit. Nach Abkühlen auf 120 °C rührt man mit Aktivkohle durch und filtriert.

Es werden 540 g eines gelb-gefärbten, klaren Öls erhalten. Dieses Organopolysiloxan hat eine Aminzahl (Anzahl der ml 1 nHCl, die zum Neutralisieren von 1 g des Öls erforderlich sind) von 4,0 und eine Viskosität von 404 $mm^2/s$ bei 25 °C. Gemäß dem $^1H$-NMR-Spektrum enthält es weniger als 0,1 % Methoxygruppen.

Herstellung des Bestandteils (4)

b) Ein Gemisch aus 1780 Teilen Methyltriethoxysilan und 648 Teilen Hexamethyldisiloxan wird mit einer Lösung von 106 ml konz. Salzsäure in 830 ml dest. Wasser versetzt. Man rührt 20 Stunden bei 100 °C, fügt 1,5 l Toluol hinzu und trennt die wäßrige Phase ab. Die Toluolphase wird 30 Minuten mit 30 g Natriumbicarbonat durchgerührt, filtriert, das Toluol anschließend bei 100 °C im Vakuum abdestilliert und der Rückstand 1 Stunde bei 120 °C im Ölpumpenvakuum ausgeheizt.

Das hergestellte verzweigtkettige Organopolysiloxan hat eine Viskosität bei 23 °C von 50 $mm^2/s$ bei 23 °C und einen OH-Gehalt von 0,2 %.

Herstellung des Kondensationskatalysators

c) Ein Gemisch aus 4 Teilen Tetra-n-propoxysilan und 1 Teil Di-n-butylzinndiacetat wird unter Rühren 6 Stunden auf 120 °C erwärmt. Gleichzeitig wird der entstehende Essigsäure-n-propylester stetig abdestilliert. Danach ist gemäß dem Infrarotspektrum die Valenzschwingung der Carbonylgruppe von Di-n-butylzinndiacetat, die bei 1600 $cm^{-1}$ liegt, verschwunden.

Herstellung des Mittels zur Verbesserung der Haftung

d) In einem mit Rückflußkühler, Thermometer und Rührer ausgestatteten 3-Halskolben werden 200 Teile eines in den endständigen Einheiten je eine Si-gebundene Hydroxylgruppe aufweisenden Dimethylpolysiloxans mit einer Viskosität von 80 mPa.s bei 23 °C und 83 Teile N-(2-Aminoethyl)-3-aminopropyltrimethoxysilan mit 1,7 Teilen 5 %-iger methanolischer Kalilauge vermischt. Das so erhaltene Gemisch wird 3 Stunden unter Rühren auf 140 °C erwärmt. Dann wird der Kolbeninhalt auf 50 °C abgekühlt und mit 1 Teil 10 %-iger wäßriger Salzsäure vermischt, der Rückflußkühler durch einen absteigenden Kühler mit

Destilliervorlage ersetzt und der Druck in dieser Vorrichtung auf 100 hPa (abs.) erniedrigt. Schließlich werden aus dem 3-Halskolben die bis zu 180 ° C bei 50 hPa (abs.) siedenden Anteile abdestilliert.

Der Rückstand ist ein Silicium-gebundene Methoxygruppen aufweisendes Organopolysiloxan aus Dimethylsiloxan- und N-(2-Aminoethyl)-3-aminopropylsiloxaneinheiten.

e) 45 Teile eines in den endständigen Einheiten je eine Sigebundene Hydroxylgruppe aufweisenden Dimethylpolysiloxans mit einer Viskosität von 75.000 mPa.s bei 23 ° C werden in der angegebenen Reihenfolge mit 30 Teilen des unter b) beschriebenen verzweigtkettigen Organopolysiloxans, 1,5 Teilen Tri-n-butylphenolpolyethylenglykolether mit 13 Ethylenoxideinheiten je Molekül, 0,75 Teilen des oben unter d) näher beschriebenen Organopolysiloxans und 3 Teilen des oben unter a) näher beschriebenen Organopolysiloxans mit über Kohlenstoff an Silicium gebundenen Aminogruppen vermischt.

In dieses Gemisch werden 7,5 Teile Methyl-tris-(methylethylketoximo)-silan eingerührt. Die so erhaltene Mischung wird mit 60 Teilen Calciumcarbonat, dessen Oberfläche mit Stearinsäure überzogen ist ("gecoatete Kreide"), 7,5 Teilen pyrogen in der Gasphase erzeugtem Siliciumdioxid mit einer Oberfläche von 150 $m^2/g$ und 1,5 Teilen des Umsetzungsproduktes, dessen Herstellung oben unter c) beschrieben wird, vermischt.

f) Die unter e) beschriebene Arbeitsweise wird wiederholt mit der Abänderung, daß anstelle von 45 Teilen 75 Teile eines in den endständigen Einheiten je eine Si-gebundene Hydroxylgruppe aufweisenden Dimethylpolysiloxans mit einer Viskosität von 75.000 mPa.s bei 23 ° C eingesetzt und auf den Zusatz des unter b) beschriebenen verzweigtkettigen Organopolysiloxans verzichtet wird.

g) Die unter e) beschriebene Arbeitsweise wird wiederholt mit der Abänderung, daß kein des oben unter a) beschriebenen Organopolysiloxans mit über Kohlenstoff an Silicium gebundenen Aminogruppen verwendet wird.

h) Die unter e) beschriebene Arbeitsweise wird wiederholt mit der Abänderung, daß anstelle von 45 Teilen 60 Teile des in den endständigen Einheiten je eine Si-gebundene Hydroxylgruppe aufweisenden Dimethylpolysiloxans mit einer Viskosität von 75.000 mPa.s bei 23 ° C und anstelle von 30 Teilen des unter b) beschriebenen verzweigtkettigen Organopolysiloxans 15 Teile eines durch Trimethylsiloxygruppen endblockierten Dimethylpolysiloxans mit einer Viskosität von 100 mPa.s bei 23 ° C eingesetzt werden.

## Vergleichsversuch 1

Herstellung der vernetzbaren Massen nicht gemäß der Erfindung

i) Die unter 1 e) beschriebene Arbeitsweise wird wiederholt mit der Abänderung, daß anstelle von 45 Teilen 60 Teile eines in den endständigen Einheiten je eine Si-gebundene Hydroxylgruppe aufweisenden Dimethylpolysiloxans mit einer Viskosität von 75.000 mPa.s bei 23 ° C und anstelle von 30 Teilen des unter b) beschriebenen verzweigtkettigen Organopolysiloxans 15 Teile eines durch Trimethylsiloxygruppen endblockierten Dimethylpolysiloxans mit einer Viskosität von 100 mPa.s bei 23 ° C verwendet werden, darüberhinaus auf den Zusatz des unter a) beschriebenen Organopolysiloxans mit über Kohlenstoff an Silicium gebundenen Aminogruppen verzichtet wird.

Die nach den Beispielen 1e) bis 1h) bzw. nach dem Vergleichsversuch 1i) erhaltenen, durch Evakuieren von Lufteinschlüssen befreiten, unter Ausschluß von Wasser lagerfähigen, bei Zutritt von Wasser bei Raumtemperatur zu Elastomeren vernetzenden RTV-Formmassen sind homogen, geschmeidig weich und standfest. Sie werden in Tuben abgefüllt. Nach 24-stündiger Lagerung der verschlossenen Tuben bei Raumtemperatur werden Proben in (0 - ca. 2 mm) dicker Schicht keilförmig, d.h. von ca. 2 auf 0 mm auslaufend, aufgetragen und insgesamt 7 Tage bei 23 ° C und 50 % relativem Wassergehalt der Luft vernetzen und lagern gelassen.

Die Prüfung der Anstrichverträglichkeit erfolgt durch Auftragen eines handelsüblichen, deckenden Lackanstrichmittels aus einer hochglänzenden, mittelgrünen Standardlackfarbe auf Alkydharzbasis (Glasurit EA Hochglanzlack der Fa. Glasurit GmbH, D-4400 Münster). Dabei wird beurteilt, ob die Lackfarbe gut oder schlecht verläuft. Die Ergebnisse sind in Tabelle 1 angegeben.

Die Lackhaftung wird 3 bis 4 Wochen nach dem Aufbringen des Anstrichmittels auf das Elastomer beurteilt. Hierzu wird bei dem aufgestrichenen, ausgehärteten Anstrichmittelfilm mittels einer Rasierklinge ein Quadrat mit einer Seitenlänge von 2,54 cm in 100 gleichgroße Quadrate mit einer Flache von je 6,45 $mm^2$ zerschnitten. Auf das so erhaltene Gitter wird ein Selbstklebeband aufgedrückt, das dann wieder mit einem Winkel von etwa 30 ° langsam abgezogen wird. Die Menge der dabei auf dem Elastomer verbleibenden kleinen Quadrate ergibt den prozentualen Wert der Retention des Anstriches. Retentionswerte von 95 - 100 % entsprechen einer ausgezeichneten Haftung. Retentionswerte von weniger als 35 % entsprechen

einer ungenügenden Haftung. Die durchschnittlichen Ergebnisse verschiedener Messungen sind in der Tabelle 1 wiedergegeben.

Die mechanischen Werte der Elastomeren werden jeweils an 2,0 ± 0,1 mm dicken Filmen bestimmt, die nach 4 Wochen Lagerung bei 23 °C und 50 % relativem Wassergehalt der Luft von der glatten, ebenen und eingefetteten Unterlage, auf denen sie erzeugt werden, entfernt werden. Die Ergebnisse sind in Tabelle 1 angegeben.

Tabelle 1

| Beispiel | Lackverlauf | Retention % | Reißfestigkeit $N/mm^2$ | Reißdehnung % | Spannungswert bei 100 % Dehnung $N/mm^2$ | Shore-A Härte |
|---|---|---|---|---|---|---|
| 1 e | sehr gut | 100 | 1,2 | 490 | 0,61 | 40 |
| 1 f | gut | 0 | 1,8 | 450 | 0,75 | 50 |
| 1 g | sehr gut | 0 | 1,4 | 560 | 0,45 | 32 |
| 1 h | gut | 55 | 1,4 | 460 | 0,63 | 39 |
| Vergleichsversuch: | | | | | | |
| 1 i | schlecht | 0 | 1,7 | 520 | 0,51 | 36 |

In allen Fällen härtete die auf das Siliconelastomer aufgebrachte Lackfarbe einwandfrei durch, sie verfärbte sich nicht und zeigte keine Runzelbildung.

Beispiel 2

Herstellung des Bestandteils (3)

a) Ein Gemisch aus 522 Teilen 3-Cyclohexylaminopropyltrimethoxysilan, 592 Teilen durch Trimethylsiloxygruppen endblockiertem Dimethylpolysiloxan mit durchschnittlich 10 Siloxaneinheiten je Molekül und 3 Teilen einer 25 %-igen Lösung von Tetramethylammoniumhydroxid in Methanol wird unter trockenem Stickstoff 1 Stunde bei 80 °C gerührt.

Man setzt daraufhin 120 Teile dest. Wasser hinzu und rührt weitere 2 Stunden bei 80 °C. Dabei destilliert ein Teil des Methanols ab. Dann wird Vakuum angelegt und Methanol und Wasser bei 13 hPa (abs.) abdestilliert. Im Anschluß daran wird das quaternäre Ammoniumhydroxid durch einstündiges Erwärmen auf 150 °C bei 13 hPa (abs.) unwirksam gemacht und gleichzeitig das Organopolysiloxan von unter diesen Bedingungen siedenden Bestandteilen befreit. Nach Abkühlen auf 120 °C rührt man mit Aktivkohle durch und filtriert.

Es werden 715 g eines klaren Öls erhalten. Dieses Organopolysiloxan hat eine Aminzahl von 2,4 und eine Viskosität von 1260 $mm^2/s$ bei 25 °C. Gemäß dem $^1H$-NMR-Spektrum enthält es weniger als 0,1 % Methoxygruppen.

Herstellung des Bestandteils (4)

b) Ein Gemisch aus 720 Teilen Dimethyldiethoxysilan, 180 Teilen Methyltriethoxysilan und 80 Teilen Trimethylchlorsilan in 500 Teilen Toluol wird mit 250 Teilen Wasser versetzt und 1 Stunde bei Raumtemperatur gerührt. Dann trennt man die wäßrige Phase ab und versetzt die Toluolphase mit 50 Teilen Hexamethyldisiloxan und 1 Teil einer säureaktivierten Bleicherde. Daraufhin wird Vakuum angelegt und durch Erwärmen auf 150 °C das Toluol abdestilliert.

Nach Filtrieren erhält man eine klare Flüssigkeit mit einer Viskosität von 12 $mm^2/s$ bei 23 °C und einem OH-Gehalt von 0,06 %.

c) Ein Gemisch aus 30 Teilen eines in den endständigen Einheiten je eine Si-gebundene Hydroxylgruppe aufweisenden Dimethylpolysiloxans mit einer Viskosität von 75.000 mPa.s bei 23 °C, 25 Teilen eines in den endständigen Einheiten je eine Si-gebundene Hydroxylgruppe aufweisenden Dimethylpolysiloxans mit einer Viskosität von 20.000 mPa.s bei 23 °C und 30 Teilen des oben unter 2 b) beschriebenen verzweigtkettigen Organopolysiloxans werden mit 30 Teilen calciniertem Aluminiumsilicat, 10 Teilen pyrogen in der Gasphase erzeugtem Siliciumdioxid mit einer Oberflache von 150 $m^2/g$ und 1,5 Teilen

pulverförmigem Natriumaluminiumsilicat mit Molekularsiebeigenschaften versetzt. Nach Einruhren der Füllstoffe bis zu deren homogenen Aufnahme werden 8 Teile Methyltri-(cyclohexylamino)-silan,2 Teile des unter 1 d) beschriebenen Organopolysiloxans und 6 Teile des unter 2 a) beschriebenen Organopolysiloxans mit uber Kohlenstoff an Silicium gebundenen Aminogruppen eingemischt.

d) Die unter c) beschriebene Arbeitsweise wird wiederholt mit der Abänderung, daß anstelle von 30 Teilen 35 Teile eines in den endstandigen Einheiten je eine Si-gebundene Hydroxylgruppe aufweisenden Dimethylpolysiloxans mit einer Viskosität von 75.000 mPa.s bei 23°C, anstelle von 25 Teilen ebenfalls 35 Teile eines in den endständigen Einheiten je eine Si-gebundene Hydroxylgruppe aufweisenden Dimethylpolysiloxans mit einer Viskosität von 20.000 mPa.s bei 23°C und anstelle von 10 Teilen 7 Teile pyrogen in der Gasphase erzeugtes Siliciumdioxid mit einer Oberflache von 150 $m^2/g$ eingesetzt werden. Darüberhinaus wird auf den Zusatz des unter 2 b) beschriebenen verzweigtkettigen Organopolysiloxans verzichtet.

e) Die unter c) beschriebene Arbeitsweise wird wiederholt mit der Abänderung, daß kein Organopolysiloxan mit über Kohlenstoff an Silicium gebundenen Aminogruppen, dessen Herstellung unter 2 a) beschrieben ist, verwendet wird.

f) Die unter c) beschriebene Arbeitsweise wird wiederholt mit der Abänderung, daß anstelle von 30 Teilen des unter 2 b) beschriebenen verzweigtkettigen Organopolysiloxans 15 Teile eines durch Trimethylsiloxygruppen endblockierten Dimethylpolysiloxans mit einer Viskosität von 100 mPa.s bei 23°C und anstelle von 10 Teilen 7 Teile pyrogen in der Gasphase erzeugtes Siliciumdioxid mit einer Oberfläche von 150 $m^2/g$ eingesetzt werden.

<u>Vergleichsversuch 2</u>

Herstellung der vernetzbaren Massen nicht gemäß der Erfindung

g) Die unter 2c) beschriebene Arbeitsweise wird wiederholt mit der Abänderung, daß anstelle von 30 Teilen des unter 2 b) beschriebenen verzweigtkettigen Organopolysiloxans 15 Teile eines durch Trimethylsiloxygruppen endblockierten Dimethylpolysiloxans mit einer Viskosität von 100 mPa.s bei 23°C, anstelle von 10 Teilen 7 Teile pyrogen in der Gasphase erzeugtes Siliciumdioxid mit einer Oberfläche von 150 $m^2/g$ eingesetzt werden und auf den Zusatz des unter 2 a) beschriebenen Organopolysiloxans mit über Kohlenstoff an Silicium gebundenen Aminogruppen verzichtet wird.

Die nach den Beispielen 2 c) bis 2 f) bzw. nach dem Vergleichsversuch 2 g) erhaltenen, durch Evakuieren von Lufteinschlüssen befreiten, unter Ausschluß von Wasser lagerfähigen, bei Zutritt von Wasser bei Raumtemperatur zu einem Elastomer vernetzenden RTV-Formmassen sind homogen, geschmeidig weich und standfest. Sie werden in Tuben abgefüllt. Nach 24-stündiger Lagerung der verschlossenen Tuben bei Raumtemperatur werden Proben in (0 - ca. 2 mm) dicker Schicht keilförmig, d.h. von ca. 2 auf 0 mm auslaufend, aufgetragen und insgesamt 7 Tage bei 23°C und 50 % relativem Wassergehalt der Luft vernetzen und lagern gelassen.

Der Lackverlauf, die Lackhaftung, sowie die mechanischen Werte werden wie in Beispiel 1 beschrieben, bestimmt. Die Ergebnisse sind in Tabelle 2 angegeben.

Tabelle 2

| Beispiel | Lackverlauf | Retention % | Reißfestigkeit $N/mm^2$ | Reißdehnung % | Spannungswert bei 100 % Dehnung $N/mm^2$ | Shore-A Härte |
|---|---|---|---|---|---|---|
| 2 c | sehr gut | 45 | 1,1 | 480 | 0,22 | 19 |
| 2 d | sehr gut | 5 | 3,1 | 270 | 1,12 | 42 |
| 2 e | sehr gut | 0 | 1,9 | 380 | 0,42 | 24 |
| 2 f | befriedigend | 30 | 2,4 | 310 | 0,66 | 32 |
| Vergleichsversuch | | | | | | |
| 2 g | schlecht | 0 | 3,1 | 280 | 0,96 | 37 |

In allen Fällen härtete der auf das Siliconelastomer aufgebrachte Lack einwandfrei durch, verfärbte sich nicht und zeigte keine Runzelbildung.

Beispiel 3

Herstellung des Bestandteils (1)

a) Bei Raumtemperatur werden 500 Teile eines in den endständigen Einheiten je eine Si-gebundene Hydroxylgruppe aufweisenden Dimethylpolysiloxans mit einer Viskosität von 75.000 mPa.s bei 23 °C mit 15 Teilen 3-Cyclohexylaminopropyltrimethoxysilan ca. 30 Minuten vermischt. Dabei setzt sich das Silan mit dem Dimethylpolysiloxan unter Abspaltung von Methanol und Bildung eines in den endstandigen Einheiten je eine Silicium-gebundene 3-Cyclohexylaminopropyl-dimethoxysiloxygruppe aufweisenden Dimethylpolysiloxans um. Dieses Siloxan ist hydrolyseempfindlich und wird in einem geschlossenen Gefäß aufbewahrt.

b) Zu einem Gemisch aus 50 Teilen des oben unter a) beschriebenen methoxyterminierten Dimethylpolysiloxans, 30 Teilen des im Beispiel 1 b) beschriebenen verzweigtkettigen Organopolysiloxans, 1,5 Teilen Tri-n-butylphenolpolyethylenglykolether mit 13 Ethylenoxideinheiten je Molekül, 3 Teilen des im Beispiel 1 a) beschriebenen Organopolysiloxans mit über Kohlenstoff an Silicium gebundenen Aminogruppen und 1 Teil des im Beispiel 1 d) beschriebenen Organopolysiloxans werden 65 Teile Calciumcarbonat, dessen Oberfläche mit Stearinsäure überzogen ist und eine spezifische Oberfläche von 20 $m^2/g$ aufweist, gegeben und homogen eingemischt. Daraufhin fügt man zuerst 1 Teil Zinkoctoat, dann 10 Teile Tetraethylsilicat und schließlich 1 Teil Tetra-i-propyltitanat hinzu und homogenisiert im Vakuum.

c) Die unter b) beschriebene Arbeitsweise wird wiederholt mit der Abänderung, daß 65 Teile anstelle von 50 Teilen des unter a) beschriebenen methoxyterminierten Organopolysiloxans eingesetzt werden und auf den Zusatz des im Beispiel 1 b) beschriebenen verzweigtkettigen Organopolysiloxans verzichtet wird.

d) Die unter b) beschriebene Arbeitsweise wird wiederholt mit der Abänderung, daß kein Organopolysiloxan mit über Kohlenstoff an Silicium gebundenen Aminogruppen eingesetzt wird, dessen Herstellung im Beispiel 1 a) beschrieben wird.

e) Die unter b) beschriebene Arbeitsweise wird wiederholt mit der Abänderung, daß anstelle von 30 Teilen des im Beispiel 1 b) beschriebenen verzweigtkettigen Organopolysiloxans 15 Teile eines durch Trimethylsiloxygruppen endblockierten Dimethylpolysiloxans mit einer Viskosität von 100 mPa.s bei 23 °C verwendet werden.

Vergleichsversuch 3

Herstellung der vernetzbaren Massen nicht gemäß der Erfindung

f) Die unter 3 b) beschriebene Arbeitsweise wird wiederholt mit der Abänderung, daß anstelle von 30 Teilen des im Beispiel 1 b) beschriebenen verzweigtkettigen Organopolysiloxans 15 Teile eines durch Trimethylsiloxygruppen endblockierten Dimethylpolysiloxans mit einer Viskosität von 100 mPa.s bei 23 °C verwendet werden und auf den Zusatz des im Beispiel 1 a) beschriebenen Organopolysiloxans mit über Kohlenstoff an Silicium gebundenen Aminogruppen verzichtet wird.

Die nach den Beispielen 3 b bis 3 e bzw. nach dem Vergleichsversuch 3 f erhaltenen, durch Evakuieren von Lufteinschlüssen befreiten, unter Ausschluß von Wasser lagerfähigen, bei Zutritt von Wasser bei Raumtemperatur zu einem Elastomer vernetzenden RTV-Formmassen sind homogen, geschmeidig weich und standfest. Sie werden in Tuben abgefüllt. Nach 24-stündiger Lagerung der verschlossenen Tuben bei Raumtemperatur werden Proben in (0 - ca. 2 mm) dicker Schicht keilförmig, d.h. von ca. 2 auf 0 mm auslaufend, aufgetragen und insgesamt 7 Tage bei 23 °C und 50 % relativem Wassergehalt der Luft vernetzen und lagern gelassen.

Der Lackverlauf, die Lackhaftung, sowie die mechanischen Werte werden, wie in Beispiel 1 beschrieben, bestimmt. Die Ergebnisse sind in Tabelle 3 angegeben.

Tabelle 3

| Beispiel | Lackverlauf | Retention % | Reißfestigkeit N/mm² | Reißdehnung % | Spannungswert bei 100 % Dehnung N/mm² | Shore-A Härte |
|---|---|---|---|---|---|---|
| 3 b | sehr gut | 45 | 2,0 | 720 | 0,46 | 31 |
| 3 c | gut | 60 | 2,1 | 570 | 0,66 | 44 |
| 3 d | sehr gut | 0 | 2,3 | 510 | 0,56 | 35 |
| 3 e | gut | 0 | 2,5 | 460 | 0,71 | 40 |
| Vergleichsversuch | | | | | | |
| 3 f | schlecht | 0 | 2,8 | 330 | 1,0 | 47 |

In allen Fällen härtete der auf das Siliconelastomer aufgebrachte Lack einwandfrei durch, verfärbte sich nicht und zeigte keine Runzelbildung.

Beispiel 4

Herstellung des Weichmachers

a) 100 Teile eines in den endständigen Einheiten je eine Vinylgruppe enthaltenden Dimethylpolysiloxans mit einer Viskosität von 20.000 mPa.s bei 23 °C werden in einem Muldenkneter unter Stickstoff mit 19 Teilen Hexamethyldisilazan und 7 Teilen Wasser versetzt und in dem Kneter 15 Minuten bei Raumtemperatur bis zur Homogenität vermischt. Daraufhin werden 63 Teile eines pyrogen in der Gasphase erzeugten Siliciumdioxids mit einer spez. Oberfläche von 300 m²/g eingemischt. Die so erhaltene Mischung wird zuerst 1 Stunde bei Raumtemperatur und dann 2 Stunden bei 100 °C geknetet. Dann wird durch Absaugen von gasförmigem Inhalt aus dem Kneter in diesem Kneter der Druck auf 80 hPa (abs.) erniedrigt, der verbleibende Inhalt auf 140 °C erwärmt und bei dieser Temperatur 2 Stunden geknetet. Nach dem Abkühlen auf Raumtemperatur und Belüften werden 100 Teile der so erhaltenen Mischung mit 30 Teilen des in den endständigen Einheiten je eine Vinylgruppe enthaltenden Dimethylpolysiloxans mit einer Viskosität von 20.000 mPa.s bei 23 °C verdünnt.

Herstellung der Härterpaste

b) In einem Planetenmischer werden 75 Teile der Mischung, deren Herstellung in diesem Beispiel oben unter a) beschrieben wird, zunächst mit 16,5 Teilen Tetra-i-butoxysilan, dann mit 6 Teilen N-(2-Aminoethyl)-3-aminoproplytriethoxysilan und schließlich mit 2,5 Teilen des Umsetzungsprodukts, dessen Herstellung im Beispiel 1 c) beschrieben wird, bei Raumtemperatur und unter dem Druck der umgebenden Atmosphäre vermischt. Durch Erniedrigung des Druckes in dem Kneter werden schließlich gasförmige Bestandteile der Masse, die Blasen in der Masse bilden, entfernt.

Es wird eine homogene, geschmeidig-weiche und standfeste Paste erhalten.

c) In einem Planetenmischer werden 60 Teile eines in den endständigen Einheiten je eine Si-gebundene Hydroxylgruppe aufweisenden Dimethylpolysiloxans mit einer Viskosität von 75.000 mPa.s bei 23 °C zunächst mit 2 Teilen Tri-n-butylphenolpolyethylenglykolether mit 13 Ethylenoxideinheiten je Molekül und 6 Teilen des im Beispiel 1 a) beschriebenen Organopolysiloxans mit über Kohlenstoff an Silicium gebundenen Aminogruppen, schließlich mit 90 Teilen Calciumcarbonat, dessen Oberfläche mit Stearinsäure überzogen ist und eine spez. Oberfläche von 20m2/g aufweist, vermischt. Daraufhin fügt man 40 Teile des im Beispiel 2 b) beschriebenen verzweigtkettigen Organopoylsiloxans hinzu und homogenisiert die Masse im Vakuum.

d) Die unter c) beschriebene Arbeitsweise wird wiederholt mit der Abänderung, daß anstelle von 60 Teilen eines in den endständigen Einheiten je eine Si-gebundene Hydroxylgruppe aufweisenden Dimethylpolysiloxans mit einer Viskosität von 75.000 mPa.s bei 23 °C 80 Teile eingesetzt werden und auf den Zusatz des im Beispiel 2 b) beschriebenen verzweigtkettigen Organopolysiloxans verzichtet wird.

e) Die unter c) beschriebene Arbeitsweise wird wiederholt mit der Abänderung, daß kein Organopolysiloxan mit über Kohlenstoff an Silicium gebundenen Aminogruppen, dessen Herstellung im Beispiel 1 a) beschrieben wird, verwendet wird.

f) Die unter c) beschriebene Arbeitsweise wird wiederholt mit der Abänderung, daß anstelle von 40 Teilen des im Beispiel 2 b) beschriebenen verzweigtkettigen Organopolysiloxans 20 Teile eines durch Trimethylsiloxygruppen endblockierten Dimethylpolysiloxans mit einer Viskosität von 100 mPa.s bei 23 °C verwendet werden.

Vergleichsversuch 4

Herstellung der vernetzbaren Massen nicht gemäß der Erfindung

g) Die unter 4 c) beschriebene Arbeitsweise wird wiederholt mit der Abänderung, daß anstelle von 40 Teilen des im Beispiel 2 b) beschriebenen verzweigtkettigen Organopolysiloxans 20 Teile eines durch Trimethylsiloxygruppen endblockierten Dimethylpolysiloxans mit einer Viskosität von 100 mPa.s bei 23 °C verwendet werden und auf den Zusatz des im Beispiel 1 a) beschriebenen Organopolysiloxans mit über Kohlenstoff an Silicium gebundenen Aminogruppen verzichtet wird.

Je 100 Teile dieser in den Beispielen 4 c) bis 4 f) bzw. in Vergleichsversuch 4 g) beschriebenen Mischungen, die ausnahmslos homogen, geschmeidig-weich und standfest sind, werden mit 10 Teilen der Paste, deren Herstellung in diesem Beispiel 4 unter b) beschrieben wird, vermischt. Diese Mischungen vulkanisieren zu Elastomeren, die wie im Beispiel 1 beschrieben geprüft werden. Die Ergebnisse sind in Tabelle 4 angegeben.

Tabelle 4

Anstrichverträglichkeit und mechanische Werte der Elastomere, die durch Zusatz von 10 Teilen der im Beispiel 4 b) beschriebenen Härterpaste zu 100 Teilen der in den Beispielen 4 c) bis 4 f) bzw. dem Vergleichsversuch 4 g) beschriebenen Grundmassen hergestellt wurden

| Beispiel | Lackverlauf | Retention % | Reißfestigkeit N/mm² | Reißdehnung % | Spannungswert bei 100 % Dehnung N/mm² | Shore-A Härte |
|---|---|---|---|---|---|---|
| 4 c | gut | 100 | 2,0 | 930 | 0,31 | 23 |
| 4 d | schlecht | 100 | 2,7 | 480 | 1,00 | 51 |
| 4 e | gut | 0 | 2,8 | 1020 | 0,36 | 22 |
| 4 f | schlecht | 100 | 2,4 | 800 | 0,46 | 32 |
| Vergleichsversuch | | | | | | |
| 4 g | schlecht | 0 | 1,8 | 470 | 0,58 | 29 |

In allen Fällen härtete der auf das Siliconelastomer aufgebrachte Lack einwandfrei durch, verfärbte sich nicht und zeigte keine Runzelbildung.

Beim Vergleich der in den Tabellen 1 bis 4 wiedergegebenen Ergebnisse zeigt es sich, daß die Kombination von erfindungsgemäßem eingesetztem Organopolysiloxan (3) mit basischem Stickstoff aufweisenden SiC-gebundenem organischen Rest und verzweigtkettigem Organopolysiloxan (4) besonders günstige Resultate hinsichtlich der Anstrichverträglichkeit bzw. Überstreichbarkeit ergibt (vgl. die Beispiele 1 e, 2 c, 3 b und 4 c).

Zwar kann bei Mischungen, die kein verzweigtkettiges Organopolysiloxan (4) aber das Organopolysiloxan (3) mit basischem Stickstoff aufweisenden SiC-gebundenen organischen Resten enthalten, eine Verbesserung der Anstrichverträglichkeit bzw. Überstreichbarkeit erzielt werden, doch sind diese Mischungen zähviskos, kittig und lassen sich folglich schwer auspressen und damit verarbeiten. Des weiteren sind die Vulkanisate hartelastisch (vgl. Beispiele 1 f, 2 d, 3 c und 4 d).

Durch Zusatz von linearem Organopolysiloxan mit terminalen Trimethylsiloxygruppen anstelle des verzweigtkettigen Organopolysiloxans (4) lassen sich diese Eigenschaften zwar bessern, doch wird durch diese Maßnahme die Lackhaftung nicht verbessert, z.T. signifikant verschlechtert (vgl. Beispiele 1 h, 2 f, 3 e und 4 f).

Bei Verwendung der erfindungsgemäßen verzweigtkettigen Organopolysiloxane anstelle von linearem Organopolysiloxan mit terminalen Trimethylsiloxygruppen, jedoch ohne Zusatz des Organopolysiloxans (3) mit basischem Stickstoff aufweisenden SiC-gebundenen organischen Resten bessert sich zwar schlagartig der Lackverlauf, jedoch haftet das Anstrichmittel nicht auf dem Dichtstoff (vgl. Beispiele 1 g, 2 e, 3 d und 4 e).

Die Vergleichsversuche 1 i, 2 g , 3 f und 4 g beweisen schließlich, daß Mischungen ohne erfindungsgemäß eingesetztes Organopolysiloxan (3) mit basischem Stickstoff aufweisenden, SiC-gebundenen organischen Resten und ohne erfindungsgemäß eingesetztes verzweigtkettiges Organopolysiloxan (4) nicht anstrichverträglich sind. Außerdem beweisen diese Beispiele, daß die Aminöle der eingangs genannten US 4 191 817, die Herstellung eines Vertreters dieser Klasse wird im Beispiel 1 d) beschrieben, keine Verbesserung der Anstrichverträglichkeit bewirken.

## Patentansprüche

## Patentansprüche für folgende Vertragsstaaten : AT, BE, CH, DE, FR, GB, IT, LI, NL, SE

1. Bei Raumtemperatur zu Elastomeren vernetzende Einkomponenten- oder Zweikomponenten-Massen auf Grundlage von Diorganopolysiloxan (1), wobei die Vernetzung der Massen durch Kondensation erfolgt, dadurch gekennzeichnet, daß die Massen
(3) Organopolysiloxan mit basischem Stickstoff aufweisenden, SiC-gebundenen organischen Resten, das hergestellt wird, indem in einer
1. Stufe Silan der Formel

$$YSiR_x(OR^1)_{3-x} ,$$

worin R gleiche oder verschiedene, einwertige, gegebenenfalls substituierte Kohlenwasserstoffreste mit 1 bis 18 Kohlenstoffatomen je Rest, $R^1$ gleiche oder verschiedene Alkylreste mit 1 bis 4 Kohlenstoffatomen je Rest, Y einen einwertigen, SiC-gebundenen organischen Rest mit basischem Stickstoff bedeutet und x 0 oder 1 ist, oder Teilhydrolysat von derartigem Silan oder derartiges Silan und Teilhydrolysat von derartigem Silan mit Organopolysiloxan der Formel

$$R_3SiO(SiR_2O)_nSiR_3 ,$$

worin R die oben dafür angegebene Bedeutung hat und n 0 oder eine ganze Zahl im Wert von 1 bis 100 bedeutet, in Mengen von 0,1 bis 10 Gewichtsteilen je Gewichtsteil der Gesamtmenge von Silan der oben angegebenen Formel und Teilhydrolysat von derartigem Silan in Gegenwart von basischem Katalysator und in Abwesenheit von Wasser umgesetzt wird und in einer
2. Stufe das in der 1. Stufe erhaltene Organopolysiloxan mit Wasser umgesetzt wird, um Gruppen der Formel

$$-OR^1 ,$$

worin $R^1$ die oben dafür angegebene Bedeutung hat, zu hydrolysieren, gleichzeitig und/oder anschließend die bei dieser Hydrolyse gebildeten Silanolgruppen miteinander kondensiert werden und das dabei gebildete Produkt von Alkanol und Wasser befreit wird
und
(4) verzweigtkettiges Organopolysiloxan, das aus
0 bis 50 Mol-% $R_3SiO_{1/2}$ - Einheiten,
0 bis 80 Mol-% $R_2SiO$ - Einheiten,
10 bis 60 Mol-% $RSiO_{3/2}$ - Einheiten und
0 bis 10 Mol-% $SiO_2$ - Einheiten,
wobei R die oben dafür angegebene Bedeutung hat und wobei dieses verzweigtkettige Organopolysiloxan 0 bis 10 Mol-% SiOC-gebundene Gruppen der Formel $-OR^2$, worin $R^2$ einwertige, gegebenenfalls durch eine Alkoxygruppe substituierte Kohlenwasserstoffreste mit 1 bis 8 Kohlenwasserstoffatomen je Rest bedeutet, und höchstens 0,5 Mol-% Si-gebundene Hydroxylgruppen enthält, besteht, enthalten oder daß die Massen den Bestandteil (4)
enthalten.

**2.** Massen nach Anspruch 1, dadurch gekennzeichnet, daß bei Raumtemperatur zu Elastomeren vernetzende Massen ein (1) kondensationsfähige Endgruppen aufweisendes Diorganopolysiloxan, sowie mindestens eine (2) Siliciumverbindung mit insgesamt mindestens drei über Stickstoff an Silicium gebundene Aminogruppen und/oder über Sauerstoff an Silicium gebundene Oximgruppen und/oder über Sauerstoff an Silicium gebundene, gegebenenfalls substituierte Kohlenwasserstoffoxygruppen je Molekül enthalten.

**3.** Massen nach Anspruch 1 oder 2, dadurch gekennzeichnet, daß es einkomponentige, unter Ausschluß von Wasser lagerfähige bei Zutritt von Wasser bei Raumtemperatur zu Elastomeren vernetzende Massen sind, die ein
(1) kondensationsfähige Endgruppen aufweisendes Diorganopolysiloxan sowie mindestens eine (2) Siliciumverbindung mit insgesamt mindestens drei über Stickstoff an Silicium gebundene Aminogruppen und/oder über Sauerstoff an Silicium gebundene Oximgruppen und/oder über Sauerstoff an Silicium gebundene, gegebenenfalls substituierte Kohlenwasserstoffoxygruppen je Molekül enthalten.

**4.** Massen nach Anspruch 1, 2 oder 3, dadurch gekennzeichnet, daß als Diorganopolysiloxan (1) solches der Formel

$$HO(SiR^3_2O)_mH ,$$

wobei $R^3$ gleiche oder verschiedene, einwertige, gegebenenfalls substituierte Kohlenwasserstoffreste mit 1 bis 18 Kohlenstoffatomen je Rest bedeutet und m eine ganze Zahl im Wert von mindestens 10 ist, verwendet wird.

**5.** Massen nach Anspruch 3, dadurch gekennzeichnet, daß als Siliciumverbindung (2) solche der Formel

(2a) $R^3_aSiZ_{4-a}$ ,

wobei $R^3$ die im Anspruch 4 angegebene Bedeutung hat, a 0 oder 1 und Z gleiche oder verschiedene hydrolysierbare Gruppen wie
Aminogruppen ($-NR^4_2$),
Oximgruppen ($-ON=CR^4_2$) und
gegebenenfalls substituierte Kohlenwasserstoffoxygruppen ($-OR^2$)
bedeuten, wobei $R^4$ Wasserstoff oder gleiche oder verschiedene, einwertige, gegebenenfalls substituierte Kohlenwasserstoffreste mit 1 bis 18 Kohlenstoffatomen je Rest bedeutet und $R^2$ die im Anspruch 1 angegebene Bedeutung hat, und deren 2 bis 10 Siliciumatome je Molekül aufweisende Teilhydrolysate verwendet werden.

**6.** Massen nach Anspruch 3, dadurch gekennzeichnet, daß als Siliciumverbindung (2) solche der Formel

(2 b) $R^5Si(OR^2)_3$ ,

wobei $R^2$ die im Anspruch 1 angegebene Bedeutung hat und $R^5$ über $C_2$- bis $C_6$-Alkylenreste mit dem Siliciumatom verbundene Amino-, Mercapto-, Morpholino-, Glycidoxy-, Acryloxy- und Methacryloxygruppen, wobei die genannten Amino- und Mercaptogruppen durch $C_1$- bis $C_6$-Alkyl-, Cycloalkyl-, Aminoalkyl- und Mercaptoalkylgruppen substituiert sein können, bedeutet und deren 2 bis 10 Siliciumatome je Molekül aufweisende Teilyhdrolysate verwendet werden.

**7.** Massen nach Anspruch 3, dadurch gekennzeichnet, daß als Siliciumverbindung (2) solche der Formel

(2 c) 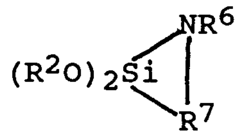 ,

wobei $R^2$ die im Anspruch 1 angegebene Bedeutung hat, $R^6$ ein Wasserstoffatom oder eine Alkyl-, Cycloalkyl-, Aminoalkyl- oder Mercaptoalkylgruppe mit jeweils 1 bis 6 Kohlenstoffatomen und $R^7$ einen zweiwertigen aliphatischen Kohlenwasserstoffrest mit 1 bis 10 Kohlenstoffatomen je Rest bedeutet, verwendet wird.

**8.** Massen nach Anspruch 1 oder 2, dadurch gekennzeichnet, daß es zweikomponentige bei Raumtemperatur zu Elastomeren vernetzende Massen sind, wobei die Komponente (A) als zu vernetzende Diorganopolysiloxane kondensationsfähige Endgruppen aufweisende Diorganopolysiloxane (1), die Komponente (B) als Vernetzer mindestens eine insgesamt mindestens drei über Sauerstoff an Silicium gebundene, gegebenenfalls substituierte Kohlenwasserstoffoxygruppen je Molekül aufweisende Siliciumverbindung (2 d) enthält.

**9.** Masse nach Anspruch 8, dadurch gekennzeichnet, daß als vernetzende Diorganopolysiloxane (1) solche der Formel

$HO(SiR^3_2O)_mH$ ,

und als Siliciumverbindung (2 d) solche der Formel

$R^3_a Si(OR^2)_{4-a}$ ,

oder deren Oligomere, wobei a 0 oder 1, m eine ganze Zahl im Wert von mindestens 10 und $R^2$ die in Anspruch 1 und $R^3$ die in Anspruch 4 angegebene Bedeutung hat, verwendet werden.

**10.** Verfahren zur Herstellung von bei Raumtemperatur zu anstrichverträglichen bis überstreichbaren Elastomeren vernetzende Einkomponenten- oder Zweikomponenten-Massen auf Grundlage von Diorganopolysiloxan (1), wobei die Vernetzung der Massen durch Kondensation erfolgt, dadurch gekennzeichnet, daß den Massen zur Erzielung von Anstrichverträglichkeit bis Überstreichbarkeit
(3) Organopolysiloxan mit basischem Stickstoff aufweisenden, SiC-gebundenen organischen Resten, das hergestellt wird, indem in einer
1. Stufe Silan der Formel $YSiR_x(OR^1)_{3-x}$ ,

worin R gleiche oder verschiedene, einwertige, gegebenenfalls substituierte Kohlenwasserstoffreste mit 1 bis 18 Kohlenstoffatomen je Rest, $R^1$ gleiche oder verschiedene Alkylreste mit 1 bis 4 Kohlenstoffatomen je Rest, Y einen einwertigen, SiC-gebundenen organischen Rest mit basischem Stickstoff bedeutet und x 0 oder 1 ist, oder Teilhydrolysat von derartigem Silan oder derartiges Silan und Teilhydrolysat von derartigem Silan mit Organopolysiloxan der Formel

$R_3SiO(SiR_2O)_nSiR_3$ ,

worin R die oben dafür angegebene Bedeutung hat und n 0 oder eine ganze Zahl im Wert von 1 bis 100 bedeutet, in Mengen von 0,1 bis 10 Gewichtsteilen je Gewichtsteil der Gesamtmenge von Silan der oben angegebenen Formel und Teilhydrolysat von derartigem Silan in Gegenwart von basischem Katalysator und in Abwesenheit von Wasser umgesetzt wird und in einer
2. Stufe das in der 1. Stufe erhaltene Organopolysiloxan mit Wasser umgesetzt wird, um Gruppen der Formel

$-OR^1$ ,

worin $R^1$ die oben dafür angegebene Bedeutung hat, zu hydrolysieren, gleichzeitig und/oder anschließend die bei dieser Hydrolyse gebildeten Silanolgruppen miteinander kondensiert werden und das dabei gebildete Produkt von Alkanol und Wasser befreit wird
und
(4) verzweigtkettiges Organopolysiloxan, das aus
0 bis 50 Mol-% $R_3SiO_{1/2}$ - Einheiten,
0 bis 80 Mol-% $R_2SiO$ - Einheiten,
10 bis 60 Mol-% $RSiO_{3/2}$ - Einheiten und
0 bis 10 Mol-% $SiO_2$ - Einheiten,
wobei R die oben dafür angegebene Bedeutung hat und wobei dieses verzweigtkettige Organopolysiloxan 0 bis 10 Mol-% SiOC-gebundene Gruppen der Formel $-OR^2$, worin $R^2$ einwertige, gegebenenfalls durch eine Alkoxygruppe substituierte Kohlenwasserstoffreste mit 1 bis 8 Kohlenwasserstoffatomen je Rest bedeutet, und höchstens 0,5 Mol-% Si-gebundene Hydroxylgruppen enthält, besteht, zugegeben werden oder daß den Massen der Bestandteil (4)
zugegeben wird.

**11.** Verwendung der Massen nach einem der Ansprüche 1 bis 9 bzw. die nach den Verfahren nach Anspruch 10 oder 11 hergestellten Massen als anstrichverträglichen bis überstreichbaren Dichtstoff, dadurch gekennzeichnet, daß die Massen die Bestandteile (3) und (4) enthalten.

**12.** Verwendung der Massen nach einem der Ansprüche 1 bis 9 bzw. die nach den Verfahren nach Anspruch 10 oder 11 herstellten Massen als anstrichverträglichen Dichtstoff, dadurch gekennzeichnet, daß die Massen den Bestandteil (4) enthalten.

**Patentansprüche für folgenden Vertragsstaat : ES**

**1.** Verfahren zur Herstellung von bei Raumtemperatur zu anstrichverträglichen bis überstreichbaren Elastomeren vernetzende Einkomponenten- oder Zweikomponenten-Massen auf Grundlage von Diorganopolysiloxan (1), wobei die Vernetzung der Massen durch Kondensation erfolgt, dadurch gekennzeichnet, daß den Massen zur Erzielung von Anstrichverträglichkeit bis Überstreichbarkeit
(3) Organopolysiloxan mit basischem Stickstoff aufweisenden, SiC-gebundenen organischen Resten, das hergestellt wird, indem in einer
1. Stufe Silan der Formel

$YSiR_x(OR^1)_{3-x}$ ,

worin R gleiche oder verschiedene, einwertige, gegebenenfalls substituierte Kohlenwasserstoffreste mit 1 bis 18 Kohlenstoffatomen je Rest, $R^1$ gleiche oder verschiedene Alkylreste mit 1 bis 4 Kohlenstoffatomen je Rest, Y einen einwertigen, SiC-gebundenen organischen Rest mit basischem Stickstoff bedeutet und x 0 oder 1 ist, oder Teilhydrolysat von derartigem Silan oder derartiges Silan und Teilhydrolysat von derartigem Silan mit Organopolysiloxan der Formel

$R_3SiO(SiR_2O)_nSiR_3$ ,

worin R die oben dafür angegebene Bedeutung hat und n 0 oder eine ganze Zahl im Wert von 1 bis 100 bedeutet, in Mengen von 0,1 bis 10 Gewichtsteilen je Gewichtsteil der Gesamtmenge von Silan der oben angegebenen Formel und Teilhydrolysat von derartigem Silan in Gegenwart von basischem Katalysator und in Abwesenheit von Wasser umgesetzt wird und in einer
2. Stufe das in der 1. Stufe erhaltene Organopolysiloxan mit Wasser umgesetzt wird, um Gruppen der Formel

$-OR^1$ ,

worin $R^1$ die oben dafür angegebene Bedeutung hat, zu hydrolysieren, gleichzeitig und/oder anschließend die bei dieser Hydrolyse gebildeten Silanolgruppen miteinander kondensiert werden und das dabei gebildete Produkt von Alkanol und Wasser befreit wird

und

(4) verzweigtkettiges Organopolysiloxan, das aus

0 bis 50 Mol-% $R_3SiO_{1/2}$ - Einheiten,

0 bis 80 Mol-% $R_2SiO$ - Einheiten,

10 bis 60 Mol-% $RSiO_{3/2}$ - Einheiten und

0 bis 10 Mol-% $SiO_2$ - Einheiten,

wobei R die oben dafür angegebene Bedeutung hat und wobei dieses verzweigtkettige Organopolysiloxan 0 bis 10 Mol-% SiOC-gebundene Gruppen der Formel $-OR^2$, worin $R^2$ einwertige, gegebenenfalls durch eine Alkoxygruppe substituierte Kohlenwasserstoffreste mit 1 bis 8 Kohlenwasserstoffatomen je Rest bedeutet, und höchstens 0,5 Mol-% Si-gebundene Hydroxylgruppen enthält, besteht, zugegeben werden oder den Massen der Bestandteil (4)

zugegeben wird.

**2.** Verwendung der nach den Verfahren nach Anspruch 1 oder 2 hergestellten Massen als anstrichverträglichen bis überstreichbaren Dichtstoff, dadurch gekennzeichnet, daß die Massen die Bestandteile (3) und (4) enthalten.

**3.** Verwendung der nach den Verfahren nach Anspruch 1 oder 2 herstellten Massen als anstrichverträglichen Dichtstoff, dadurch gekennzeichnet, daß die Massen den Bestandteil (4) enthalten.

## Claims

### Claims for the following Contracting States : AT, BE, CH, DE, FR, GB, IT, LI, NL, SE

**1.** One-component or two-component compositions which crosslink at room temperature to form elastomers and are based on diorganopolysiloxane (1), the crosslinking of the compositions taking place by condensation, characterized in that the compositions contain

(3) an organopolysiloxane containing SiC-bound organic radicals having a basic nitrogen and is prepared by reacting, in a 1st step, a silane of the formula

$$YSiR_x(OR^1)_{3-x} ,$$

in which R denotes identical or different, monovalent, optionally substituted hydrocarbon radicals having 1 to 18 carbon atoms per radical, $R^1$ denotes identical or different alkyl radicals having 1 to 4 carbon atoms per radical, Y denotes a monovalent, SiC-bound organic radical having a basic nitrogen, and x is 0 or 1, or a partial hydrolysate of a silane of this type, or a silane of this type and a partial hydrolysate of a silane of this type with an organopolysiloxane of the formula

$$R_3SiO(SiR_2O)_nSiR_3 ,$$

in which R has the abovementioned meaning for R, and n denotes 0 or an integer having the value 1 to 100, in amounts of from 0.1 to 10 parts by weight per part by weight of the total amount of the silane of the abovementioned formula and the partial hydrolysate of the silane of this type, in the presence of a basic catalyst and in the absence of water, and, in a 2nd step, reacting the organopolysiloxane obtained in the 1st step with water in order to hydrolyse groups of the formula

$$-OR^1 ,$$

in which $R^1$ has the abovementioned meaning for $R^1$, simultaneously and/or subsequently condensing the silanol groups formed during this hydrolysis with one another, and freeing the product formed during this reaction from alkanol and water, and

(4) a branched organopolysiloxane which comprises

0 to 50 mol-% of $R_3SiO_{1/2}$ units, 0 to 80 mol-% of $R_2SiO$ units,

10 to 60 mol-% of $RSiO_{3/2}$ units and

0 to 10 mol-% of $SiO_2$ units,

where R has the abovementioned meaning for R, and where this branched organopolysiloxane contains 0 to 10 mol-% of SiOC-bound groups of the formula $-OR^2$, in which $R^2$ denotes monovalent hydrocarbon radicals having 1 to 8 carbon atoms per radical and optionally substituted by an alkoxy group, and a maximum of 0.5 mol-% of Si-bound hydroxyl groups, or in that the compositions contain component (4).

**2.** Compositions according to Claim 1, characterized in that compositions which crosslink at room temperature to form elastomers contain
(1) a diorganopolysiloxane containing end groups which are capable of condensation, and
(2) a silicon compound containing a total of at least three amino groups bonded to silicon via nitrogen and/or oxime groups bonded to silicon via oxygen and/or optionally substituted hydrocarbonoxy groups bonded to silicon via oxygen per molecule.

**3.** Compositions according to Claim 1 or 2, characterized in that they are one-component compositions which have a long shelf life in the absence of water, but crosslink at room temperature in the presence of water to form elastomers and contain
(1) a diorganopolysiloxane containing end groups which are capable of condensation and
(2) a silicon compound containing a total of at least three amino groups bonded to silicon via nitrogen and/or oxime groups bonded to silicon via oxygen and/or optionally substituted hydrocarbonoxy groups bonded to silicon via oxygen per molecule.

**4.** Compositions according to Claim 1, 2 or 3, characterized in that the diorganopolysiloxane (1) used is a diorganopolysiloxane of the formula

$HO(SiR^3_2O)_m H$ ,

where $R^3$ denotes identical or different, monovalent, optionally substituted hydrocarbon radicals having 1 to 18 carbon atoms per radical, and m is an integer having a value of at least 10.

**5.** Compositions according to Claim 3, characterized in that the silicon compound (2) used are compounds of the formula

(2a) $R^3_a SiZ_{4-a}$ ,

where $R^3$ has the meaning given in Claim 4, a denotes 0 or 1 and Z denotes identical or different hydrolysable groups, such as
amino groups ($-NR^4_2$) ,
oxime groups ($-ON=CR^4_2$) and
optionally substituted hydrocarbonoxy groups ($-OR^2$) ,
where $R^4$ denotes hydrogen or identical or different, monovalent, optionally substituted hydrocarbon radicals having 1 to 18 carbon atoms per radical, and $R^2$ has the meaning given in Claim 1, and the partial hydrolysates thereof containing 2 to 10 silicon atoms per molecule.

**6.** Compositions according to Claim 3, characterized in that the silicon compound (2) used are compounds of the formula

(2b) $R^5Si(OR^2)_3$ ,

where $R^2$ has the meaning given in Claim 1 and $R^5$ denotes amino, mercapto, morpholino, glycidoxy, acryloxy and methacryloxy groups which are bound to the silicon atom via $C_2$- to $C_6$-alkylene radicals, where the amino and mercapto groups mentioned may be substituted by $C_1$- to $C_6$-alkyl, cycloalkyl, aminoalkyl and mercaptoalkyl groups, and the partial hydrolysates thereof containing 2 to 10 silicon atoms per molecule.

**7.** Compositions according to Claim 3, characterized in that the silicon compound (2) used is a compound of the formula

(2c) 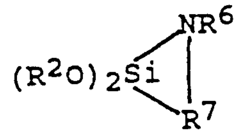 ,

where $R^2$ has the meaning given in Claim 1, $R^6$ denotes a hydrogen atom or an alkyl, cycloalkyl, aminoalkyl or mercaptoalkyl group, in each case having 1 to 6 carbon atoms, and $R^7$ denotes a divalent aliphatic hydrocarbon radical having 1 to 10 carbon atoms per radical.

**8.** Compositions according to Claim 1 or 2, characterized in that they are two-component compositions which crosslink at room temperature to form elastomers, component (A) containing, as diorganopolysiloxanes to be crosslinked, diorganopolysiloxanes (1) having end groups which are capable of condensation, and component (B) containing, as crosslinking agent, at least one silicon compound (2d) having a total of at least three optionally substituted hydrocarbonoxy groups bonded to silicon via oxygen per molecule.

**9.** Composition according to Claim 8, characterized in that the diorganopolysiloxanes (1) to be crosslinked which are used are compounds of the formula

$HO(SiR^3_2 O)_m H$

and the silicon compound (2d) used is a compound of the formula

$R^3_a Si(OR^2)_{4-a}$ ,

or the oligomers thereof, where a 0 or 1, m an integer having a value of at least 10 and $R^2$ has the meaning given in Claim 1 and $R^3$ has the meaning given in Claim 4 (sic).

**10.** Process for the preparation of one-component or two-component compositions which crosslink at room temperature to form paint-compatible to overcoatable elastomers and are based on diorganopolysiloxane (1), the crosslinking of the compositions taking place by condensation, characterized in that, in order to achieve paint-compatibility to overcoatability,

(3) an organopolysiloxane containing SiC-bound organic radicals having a basic nitrogen and is prepared by reacting, in a 1st step, a silane of the formula

$YSiR_x(OR^1)_{3-x}$ ,

in which R denotes identical or different, monovalent, optionally substituted hydrocarbon radicals having 1 to 18 carbon atoms per radical, $R^1$ denotes identical or different alkyl radicals having 1 to 4 carbon atoms per radical, Y denotes a monovalent, SiC-bound organic radical having a basic nitrogen, and x is 0 or 1, or a partial hydrolysate of a silane of this type, or a silane of this type and a partial hydrolysate of a silane of this type with an organopolysiloxane of the formula

$R_3 SiO(SiR_2 O)_n SiR_3$ ,

in which R has the abovementioned meaning for R, and n denotes 0 or an integer having the value 1 to 100, in amounts of from 0.1 to 10 parts by weight per part by weight of the total amount of the silane of the above-mentioned formula and the partial hydrolysate of the silane of this type, in the presence of a basic catalyst and in the absence of water, and, in a 2nd step, reacting the organopolysiloxane obtained in the 1st step with water in order to hydrolyse groups of the formula

$-OR^1$ ,

in which $R^1$ has the abovementioned meaning for $R^1$, simultaneously and/or subsequently condensing the silanol groups formed during this hydrolysis with one another, and freeing the product formed during this reaction from alkanol and water,
and

(4) a branched organopolysiloxane which comprises
0 to 50 mol-% of $R_3SiO_{1/2}$ units,
0 to 80 mol-% of $R_2SiO$ units,
10 to 60 mol-% of $RSiO_{3/2}$ units and
0 to 10 mol-% of $SiO_2$ units,
where R has the abovementioned meaning for R, and where this branched organopolysiloxane contains 0 to 10 mol-% of SiOC-bound groups of the formula $-OR^2$, in which $R^2$ denotes monovalent hydrocarbon radicals having 1 to 8 carbon atoms per radical and optionally substituted by an alkoxy group, and a maximum of 0.5 mol-% of Si-bound hydroxyl groups, are added to the compositions or in that component (4) is added to the compositions.

**11.** Use of the compositions according to one of Claims 1 to 9 or the compositions prepared by the processes according to Claim 10 or 11 (sic] as a paint-compatible to overcoatable sealant, characterized in that the compositions contain components (3) and (4).

**12.** Use of the compositions according to one of Claims 1 to 9 or the compositions prepared by the processes according to Claim 10 or 11 as a paint-compatible sealant, characterized in that the compositions contain component (4).

**Claims for the following Contracting State : ES**

**1.** Process for the preparation of one-component or two-component compositions which crosslink at room temperature to form paint-compatible to overcoatable elastomers and are based on diorganopolysiloxane (1), the crosslinking of the compositions taking place by condensation, characterized in that, in order to achieve paint-compatibility to overcoatability,
(3) an organopolysiloxane containing SiC-bound organic radicals having a basic nitrogen and is prepared by reacting, in a 1st step,
a silane of the formula

$YSiR_x(OR^1)_{3-x}$ ,

in which R denotes identical or different, monovalent, optionally substituted hydrocarbon radicals having 1 to 18 carbon atoms per radical, $R^1$ denotes identical or different alkyl radicals having 1 to 4 carbon atoms per radical, Y denotes a monovalent, SiC-bound organic radical having a basic nitrogen, and x is 0 or 1, or a partial hydrolysate of a silane of this type, or a silane of this type and a partial hydrolysate of a silane of this type with an organopolysiloxane of the formula

$R_3SiO(SiR_2O)_nSiR_3$ ,

in which R has the abovementioned meaning for R, and n denotes 0 or an integer having the value 1 to 100, in amounts of from 0.1 to 10 parts by weight per part by weight of the total amount of the silane of the abovementioned formula and the partial hydrolysate of the silane of this type, in the presence of a basic catalyst and in the absence of water, and, in a 2nd step, reacting the organopolysiloxane obtained in the 1st step with water in order to hydrolyse groups of the formula

$-OR^1$ ,

in which $R^1$ has the abovementioned meaning for $R^1$, simultaneously and/or subsequently condensing the silanol groups formed during this hydrolysis with one another, and freeing the product formed during this reaction from alkanol and water, and
(4) a branched organopolysiloxane which comprises
0 to 50 mol-% of $R_3SiO_{1/2}$ units,
0 to 80 mol-% of $R_2SiO$ units,
10 to 60 mol-% of $RSiO_{3/2}$ units and
0 to 10 mol-% of $SiO_2$ units,
where R has the abovementioned meaning for R, and where this branched organopoly-siloxane contains 0 to 10 mol-% of SiOC- bound groups of the formula $-OR^2$ in which $R^2$ denotes monovalent hydrocarbon radicals having 1 to 8 carbon atoms per radical and optionally substituted by an alkoxy

group, and a maximum of 0.5 mol-% of Si-bound hydroxyl groups, are added to the compositions, or component (4) is added to the compositions.

**2.** Use of the compositions prepared by the processes according to Claim 1 or 2 as a paint-compatible to overcoatable sealant, characterized in that the compositions contain components (3) and (4).

**3.** Use of the compositions prepared by the processes according to Claim 1 or 2 as a paint-compatible sealant, characterized in that the compositions contain component (4).

**Revendications**
**Revendications pour les Etats contractants suivants : AT, BE, CH, DE, FR, GB, IT, LI, NL, SE**

**1.** Compositions à un ou deux composants, réticulables à la température ambiante pour donner des élastomères, à base d'un diorganosiloxane (1), la réticulation des compositions s'effectuant par condensation, caractérisées en ce qu'elles contiennent :

(3) un polyorganosiloxane comportant des radicaux organiques liés par liaison SiC et possédant un azote basique, que l'on prépare,

dans une première étape, en faisant réagir un silane de formule

$YSiR_x(OR^1)_{3-x}$

dans laquelle R représente des radicaux hydrocarbonés identiques ou différents, monovalents, éventuellement substitués, ayant de 1 à 18 atomes de carbone par radical, les radicaux $R^1$ sont des radicaux alkyle identiques ou différents ayant de 1 à 4 atomes de carbone par radical, Y est un radical organique monovalent lié par liaison SiC, comportant un azote basique, et x vaut 0 ou 1, ou encore un hydrolysat partiel de ce silane, ou un silane analogue et un hydrolysat partiel d'un silane analogue, avec un polyorganosiloxane de formule

$R_3SiO(SiR_2O)_nSiR_3$

dans laquelle R a les significations données ci-dessus et n vaut 0 ou est un nombre entier valant de 1 à 100, en des quantités de 0,1 à 10 parties en poids par partie en poids de la quantité totale de silane ayant la formule ci-dessus et de l'hydrolysat partiel du silane de ce type, en présence d'un catalyseur basique et en l'absence d'eau, et

dans une deuxième étape, on fait réagir avec de l'eau le polyorganosiloxane obtenu dans la première étape, pour hydrolyser des groupes de formule

$-OR^1$

où $R^1$ a les significations données ci-dessus, on condense, simultanément et/ou successivement, les uns avec les autres les groupes silanol formés lors de cette hydrolyse, et on débarrasse de l'alcanol et de l'eau le produit ainsi formé, et

(4) un polyorganosiloxane à chaîne ramifiée, lequel est constitué
de 0 à 50 % en moles de motifs $R_3SiO_{1/2}$,
de 0 à 80 % en moles de motifs $R_2SiO$,
de 10 à 60 % en moles de motifs $RSiO_{3/2}$, et
de 0 à 10 % en moles de motifs $SiO_2$,
les radicaux R ayant les significations données ci-dessus, ce polyorganosiloxane à chaîne ramifiée contenant de 0 à 10 % en moles de groupes liés par liaison SiOC de formule $-OR^2$, où $R^2$ représente des radicaux hydrocarbonés monovalents, éventuellement substitués par un groupe alcoxy et ayant de 1 à 8 atomes de carbone par radical, et au plus 0,5 % en moles de groupes hydroxyle liés à Si,

ou encore que les compositions contiennent le constituant (4).

**2.** Compositions selon la revendication 1, caractérisées en ce que les compositions réticulables en élastomères à la température ambiante contiennent (1) un polydiorganosiloxane comportant des groupes terminaux condensables, ainsi qu'au moins (2) un composé du silicium comportant en tout par molécule au moins 3 groupes amino liés au silicium par l'intermédiaire d'un azote et/ou groupes oxime

liés au silicium par l'intermédiaire d'un oxygène et/ou groupes hydrocarbone-oxy liés au silicium par l'intermédiaire d'un oxygène et éventuellement substitués.

**3.** Compositions selon la revendication 1 ou 2, caractérisées en ce qu'il s'agit de compositions à un composant, stockables à l'abri de l'eau, réticulables par apport d'eau à la température ambiante pour donner des élastomères, qui contiennent (1) un polydiorganosiloxane comportant des groupes terminaux condensables, ainsi qu'au moins (2) un composé du silicium comportant en tout par molécule au moins 3 groupes amino liés au silicium par l'intermédiaire d'un azote et/ou groupes oxime liés au silicium par l'intermédiaire d'un oxygène et/ou groupes hydrocarbone-oxy liés au silicium par l'intermédiaire d'un oxygène et éventuellement substitués.

**4.** Compositions selon les revendications 1, 2 ou 3, caractérisées en ce que l'on utilise comme polyorganosiloxane (1) un tel composé de formule

$HO(SiR^3{}_2O)_mH$

dans laquelle les radicaux $R^3$ sont des radicaux hydrocarbonés identiques ou différents, monovalents, éventuellement substitués, ayant de 1 à 18 atomes de carbone par radical, et m est un nombre entier valant au moins 10.

**5.** Compositions selon la revendication 3, caractérisées en ce qu'on utilise comme composé du silicium (2), un tel composé de formule

(2 a) $R^3{}_aSiZ_{4-a}$

dans laquelle les radicaux $R^3$ ont les significations données dans la revendication 4, a vaut 0 ou 1, et Z représente des groupes hydrolysables identiques ou différents, tels que

Groupes amino (-$NR^4{}_2$)

Groupes oxime (-$ON=CR^4{}_2$) et

Groupes hydrocarboneoxy éventuellement substitués (-$OR^2$)

où $R^4$ est un hydrogène ou représente des radicaux hydrocarbonés monovalents, identiques ou différents, éventuellement substitués, ayant de 1 à 18 atomes de carbones par radical, et les radicaux $R^2$ ont les significations données dans la revendication 1, et leurs hydrolysats partiels, ayant par molécule de 2 à 10 atomes de silicium.

**6.** Compositions selon la revendication 3, caractérisées en ce qu'on utilise en tant que composé du silicium (2) un tel composé de formule

(2 b) $R^5Si(OR^2)_3$

dans laquelle $R^2$ a les significations données dans la revendication 1, et $R^5$ représente des groupes amino, mercapto, morpholino, glycidoxy, acryloxy et méthacryloxy liés à l'atome de silicium par l'intermédiaire de radicaux alkylène en $C_2$-$C_6$, les groupes amino et mercapto ci-dessus pouvant être substitués par des substituants alkyle en $C_1$-$C_6$, cycloalkyle, aminoalkyle et mercaptoalkyle, et leurs hydrolysats partiels, ayant par molécule de 2 à 10 atomes de silicium.

**7.** Compositions selon la revendication 3, caractérisées en ce qu'on utilise comme composé du silicium (2) un tel composé de formule

(2 c) 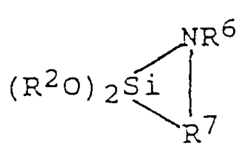 ,

où $R^2$ a les significations données dans la revendication 1, $R^6$ est un atome d'hydrogène ou un groupe alkyle, cycloalkyle, aminoalkyle ou mercaptoalkyle ayant de 1 à 6 atomes de carbone, et $R^7$ est un

radical hydrocarboné aliphatique divalent ayant par radical de 1 à 10 atomes de carbone.

**8.** Compositions selon les revendications 1 ou 2, caractérisées en ce qu'il s'agit de compositions à deux composants, réticulables en élastomères à la température ambiante, où le constituant (A) contient en tant que polydiorganosiloxanes réticulables des polydiorganosiloxanes (1) comportant des groupes terminaux condensables, le constituant (B), en tant qu'agents de réticulation, contient au moins un composé du silicium 2 d), comportant en tout, par molécule, au moins 3 groupes hydrocarbone-oxy liés au silicium par l'intermédiaire d'un oxygène et éventuellement substitués.

**9.** Composition selon la revendication 8, caractérisée en ce qu'on utilise en tant que polyorganosiloxanes réticulables (1) ceux qui ont la formule

$HO(SiR^3{}_2O)_mH$

et en tant que composé du silicium 2 g) ceux de formule

$R^3{}_aSi(OR^2)_{4-a}$

ou leurs oligomères, où a vaut 0 ou 1, m est un nombre entier valant au moins 10, et $R^2$ a les significations données dans la revendication 1, et $R^3$ a les significations données dans la revendication 4.

**10.** Procédé pour préparer des compositions à 1 ou 2 composants, à base d'un polyorganosiloxane (1), réticulables à la température ambiante pour donner des élastomères présentant des propriétés allant de la compatibilité avec les produits de revêtement à l'aptitude au recouvrement, la réticulation des compositions s'effectuant par condensation, caractérisée en ce qu'on ajoute aux compositions, pour obtenir les propriétés allant de la compatibilité avec les produits de revêtement à l'aptitude au recouvrement,

(3) un polyorganosiloxane comportant des radicaux organiques liés par liaison SiC et possédant un azote basique, que l'on prépare,

dans une première étape, en faisant réagir un silane de formule

$YSiR_x(OR^1)_{3-x}$

dans laquelle R représente des radicaux hydrocarbonés identiques ou différents, monovalents, éventuellement substitués, ayant de 1 à 18 atomes de carbone par radical, les radicaux $R^1$ sont des radicaux alkyle identiques ou différents ayant de 1 à 4 atomes de carbone par radical, Y est un radical organique monovalent lié par liaison SiC, comportant un azote basique, et x vaut 0 ou 1, ou encore un hydrolysat partiel de ce silane, ou un silane analogue et un hydrolysat partiel d'un silane analogue, avec un polyorganosiloxane de formule

$R_3SiO(SiR_2O)_nSiR_3$

dans laquelle R a les significations données ci-dessus et n vaut 0 ou est un nombre entier valant de 1 à 100, en des quantités de 0,1 à 10 parties en poids par partie en poids de la quantité totale de silane ayant la formule ci-dessus et de l'hydrolysat partiel du silane de ce type, en présence d'un catalyseur basique et en l'absence d'eau, et

dans une deuxième étape, on fait réagir avec de l'eau le polyorganosiloxane obtenu dans la première étape, pour hydrolyser des groupes de formule

$-OR^1$

où $R^1$ a les significations données ci-dessus, on condense, simultanément et/ou successivement, les uns avec les autres les groupes silanol formés lors de cette hydrolyse, et on débarrasse de l'alcanol et de l'eau le produit ainsi formé, et

(4) un polyorganosiloxane à chaîne ramifiée, lequel est constitué
de 0 à 50 % en moles de motifs $R_3SiO_{1/2}$,
de 0 à 80 % en moles de motifs $R_2SiO$,

de 10 à 60 % en moles de motifs $RSiO_{3/2}$, et
de 0 à 10 % en moles de motifs $SiO_2$,
les radicaux R ayant les significations données ci-dessus, ce polyorganosiloxane à chaîne ramifiée contenant de 0 à 10 % en modes de groupes liés par liaison SiOC de formule-$OR^2$, où $R^2$ représente des radicaux hydrocarbonés monovalents, éventuellement substitués par un groupe alcoxy et ayant de 1 à 8 atomes de carbone par radical, et au plus 0,5 % en modes de groupes hydroxyle liés à Si,
ou que l'on ajoute aux compositions le constituant (4).

**11.** Utilisation des compositions selon l'une des revendications 1 à 9, ou des compositions préparées par les procédés selon les revendications 10 ou 11, en tant que matériaux d'étanchéité ayant des propriétés allant de la compatibilité avec les produits de revêtement à l'aptitude au recouvrement, caractérisée en ce que les compositions contiennent les constituants (3) et (4).

**12.** Utilisation des compositions selon l'une des revendications 1 à 9, ou des compositions préparées par les procédés selon les revendications 10 ou 11, en tant que matériau d'étanchéité compatible avec les produits de revêtement, caractérisée en ce que les compositions contiennent le constituant (4).

**Revendications pour l'Etat contractant suivant : ES**

**1.** Procédé pour préparer des compositions à 1 ou 2 composants, à base d'un polyorganosiloxane (1), réticulables à la température ambiante pour donner des élastomères présentant des propriétés allant de la compatibilité avec les produits de revêtement à l'aptitude au recouvrement, la réticulation des compositions s'effectuant par condensation, caractérisée en ce qu'on ajoute aux compositions, pour obtenir les propriétés allant de la compatibilité avec les produits de revêtement à l'aptitude au recouvrement,
(3) un polyorganosiloxane comportant des radicaux organiques liés par liaison SiC et possédant un azote basique, que l'on prépare,
dans une première étape, en faisant réagir un silane de formule

$YSiR_x(OR^1)_{3-x}$

dans laquelle R représente des radicaux hydrocarbonés identiques ou différents, monovalents, éventuellement substitués, ayant de 1 à 18 atomes de carbone par radical, les radicaux $R^1$ sont des radicaux alkyle identiques ou différents ayant de 1 à 4 atomes de carbone par radical, Y est un radical organique monovalent lié par liaison SiC, comportant un azote basique, et x vaut 0 ou 1, ou encore un hydrolysat partiel de ce silane, ou un silane analogue et un hydrolysat partiel d'un silane analogue, avec un polyorganosiloxane de formule

$R_3SiO(SiR_2O)_nSiR_3$

dans laquelle R a les significations données ci-dessus et n vaut 0 ou est un nombre entier valant de 1 à 100, en des quantités de 0,1 à 10 parties en poids par partie en poids de la quantité totale de silane ayant la formule ci-dessus et de l'hydrolysat partiel du silane de ce type, en présence d'un catalyseur basique et en l'absence d'eau, et
dans une deuxième étape, on fait réagir avec de l'eau le polyorganosiloxane obtenu dans la première étape, pour hydrolyser des groupes de formule

$-OR^1$

où $R^1$ a les significations données ci-dessus, on condense, simultanément et/ou successivement, les uns avec les autres les groupes silanol formés lors de cette hydrolyse, et on débarrasse de l'alcanol et de l'eau le produit ainsi formé, et
(4) un polyorganosiloxane à chaîne ramifiée, lequel est constitué
de 0 à 50 % en moles de motifs $R_3SiO_{1/2}$,
de 0 à 80 % en moles de motifs $R_2SiO$,
de 10 à 60 % en moles de motifs $RSiO_{3/2}$, et

de 0 à 10 % en moles de motifs $SiO_2$,

les radicaux R ayant les significations données ci-dessus, ce polyorganosiloxane à chaîne ramifiée contenant de 0 à 10 % en moles de groupes liés par liaison SiOC de formule-$OR^2$, où $R^2$ représente des radicaux hydrocarbonés monovalents, éventuellement substitués par un groupe alcoxy et ayant de 1 à 8 atomes de carbone par radical, et au plus 0,5 % en moles de groupes hydroxyle liés à Si,

ou que l'on ajoute aux compositions le constituant (4).

**2.** Utilisation des compositions préparées par les procédés selon les revendications 1 ou 2, en tant que matériau d'étanchéité présentant des propriétés allant de la compatibilité avec les produits de revêtement à l'aptitude au recouvrement, caractérisée en ce que les compositions contiennent les constituants 3 et 4.

**3.** Utilisation des compositions préparées par les procédés selon les revendications 1 ou 2 en tant que matériau d'étanchéité compatible avec les produits de revêtement, caractérisée en ce que les compositions contiennent le constituant (4).